# EUROPÄISCHE PATENTANMELDUNG

(11) **EP 2 461 049 A1**
(43) Veröffentlichungstag der Anmeldung: **06.06.2012**
(21) Anmeldenummer: 11191422.2
(22) Anmeldetag: 30.11.2011
(51) Int. Cl.: F16B 12/12, F16B 12/24, F16B 5/06

(54) **Verbindung von Modulen**

(30) Priorität: 01.12.2010 DE 102010062312
(71) Anmelder: Schedl, Julia, 6020 Innsbruck (AT)
(72) Erfinder: Schedl, Julia, 6020 Innsbruck (AT)
(74) Vertreter: Dilg, Haeusler, Schindelmann Patentanwaltsgesellschaft mbH

(57) **Zusammenfassung**

Verbindungsanordnung (300), die ein erstes Modul (200), das eine erste Aussparung (204) aufweist, ein zweites Modul (202), das eine zweite Aussparung (206) aufweist, und ein Verbindungselement (100) zum Verbinden des ersten Moduls (200) mit dem zweiten Modul (202) aufweist, wobei das Verbindungselement (100) einen Zentralabschnitt (102), in dem ein Spalt (104) gebildet ist, einen sich von dem Zentralabschnitt (102) aus entlang einer ersten Richtung (106) erstreckenden ersten Eingriffsabschnitt (108) mit Hinterschnitt (110) zum Einführen in eine erste Aussparung (204) des ersten Moduls (200) und in eine zweite Aussparung (206) des zweiten Moduls (202), einen sich von dem Zentralabschnitt (102) aus entlang einer zweiten Richtung (112) erstreckenden zweiten Eingriffsabschnitt (114) mit Hinterschnitt (116) zum Einführen in die erste Aussparung (204) des ersten Moduls (200) und in die zweite Aussparung (206) des zweiten Moduls (202), wobei die zweite Richtung (112) der ersten Richtung (106) entgegengesetzt ist, eine sich in den Spalt (104) hinein erstreckende Spreizelementaufnahme (118) zum Aufnehmen eines Spreizelements (120) und das Spreizelement (120) aufweist, das zum Einführen in die Spreizelementaufnahme (118) derart eingerichtet ist, dass mit dem Einführen sich der erste Eingriffsabschnitt (108) in dem ersten Modul (200) und in dem zweiten Modul (202) und der zweite Eingriffsabschnitt (114) in dem ersten Modul (200) und in dem zweiten Modul (202) verspreizt, womit das erste Modul (200) und das zweite Modul (202) mittels des Verbindungselements (100) miteinander lösbar verbindbar sind. In Einführrichtung des Verbindungselements (100) in die erste Aussparung (204) und die zweite Aussparung (206) weist das Verbindungselement (100) eine kleinere Länge (L) auf als das erste Modul (200) und das zweite Modul (202).

## Beschreibung

Diese Anmeldung beansprucht die Priorität des Anmeldetags der Deutschen Patentanmeldung Nr. 102010062312.1, eingereicht am 1. Dezember 2010.

Die Erfindung betrifft eine Verbindung von Modulen, insbesondere und vorzugsweise im Möbelbau, sowie ein Verfahren zur technischen Herstellung derselben.

Es gibt Holzverbindungen in Form von Gratleisten und
Schwalbenschwanzverbindungen. Diese werden verleimt und stellen somit eine dauerhafte, fixe Verbindung dar. Die Verbindung lässt sich nicht mehr lösen.

AT 3711 U1 offenbart, dass bei einem Kasten eine an der Öffnungsseite des Kastens angrenzende erste Seitenwand eine Gratleiste trägt und die der ersten Seitenwand gegenüberliegende zweite Seitenwand eine erste Gratnut aufweist, deren Querschnitt wenigstens abschnittsweise dem Querschnitt der äußeren Gratleiste gleicht und in solcher Weise ausgebildet ist. Eine mit der genannten äußeren Gratleiste identische Gratleiste ist in die erste Gratnut einschiebbar. Damit kann ein Regal aufgebaut werden, das beliebig erweiterbar ist, das ohne teures Zubehör verstellbar ist und in dem flache Gegenstände wie zum Beispiel Zeitschriften oder dergleichen ohne zusätzliche Zubehörteile ohne Risiko eines Umfallens oder Umknickens gelagert werden können.

US 6,357,960 offenbart ein nicht-überstehendes expandierbares Klemmgerät. Fig. 9 der US 6,357,960 zeigt zwei mittels des Klemmgeräts zu verbindende Körper, deren Länge der Länge des Klemmgeräts entspricht.

US 2006/0165484 offenbart ein Verbindungssystem für Gebäudematerialien. Fig. 1C der US 2006/0165484 zeigt ein langgestrecktes Verbindungselement zum Durchführen durch eine gesamte Nut eines zu verbindenden Teils.

DE 35 42 830 offenbart ein Verbindungselement zum Verbinden selbständiger Teile, das einstückig ausgebildet ist und einen konvexen Querschnitt mit hinterschnittenen Flanken aufweist. Aus Fig. 6 der DE 35 42 830 ist zu erkennen, dass mehrere Verbindungselemente nach Art einer Verlängerung untereinander zu verbinden sind, wobei jedes dieser Verbindungselemente einen Längsschlitz und eine Längsbohrung enthalten kann.

Es ist eine Aufgabe der vorliegenden Erfindung, ein System zum Verbinden von Modulen mit hoher Flexibilität bereitzustellen.

Diese Aufgabe wird durch die Gegenstände mit den Merkmalen gemäß den unabhängigen Patentansprüchen gelöst.

Gemäß einem Ausführungsbeispiel der vorliegenden Erfindung ist ein Verbindungselement zum Verbinden eines ersten Moduls mit einem zweiten Modul geschaffen, wobei das Verbindungselement einen Zentralabschnitt, in dem ein Spalt gebildet ist, einen sich von dem Zentralabschnitt aus entlang einer ersten Richtung erstreckenden ersten Eingriffsabschnitt mit Hinterschnitt zum Einführen in eine erste Aussparung (insbesondere mit Hinterschnitt) des ersten Moduls und in eine zweite Aussparung (insbesondere mit Hinterschnitt) des zweiten Moduls, einen sich von dem Zentralabschnitt aus entlang einer zweiten Richtung erstreckenden zweiten Eingriffsabschnitt mit Hinterschnitt zum Einführen in die erste Aussparung des ersten Moduls und in die zweite Aussparung des zweiten Moduls, wobei die zweite Richtung der ersten Richtung entgegengesetzt ist, eine sich in den Spalt hinein erstreckende Spreizelementaufnahme zum Aufnehmen eines Spreizelements und das Spreizelement aufweist, das zum Einführen in die Spreizelementaufnahme derart eingerichtet ist, dass mit dem Einführen sich der erste Eingriffsabschnitt in dem ersten Modul und in dem zweiten Modul und der zweite Eingriffsabschnitt in dem ersten Modul und in dem zweiten Modul verspreizt, womit das erste Modul und das zweite Modul mittels des Verbindungselements miteinander lösbar verbindbar sind.

Gemäß einem anderen Ausführungsbeispiel der vorliegenden Erfindung ist eine Anordnung zum Verbinden eines ersten Moduls mit einem zweiten Modul bereitgestellt, wobei die Anordnung das erste Modul, das eine erste Aussparung (insbesondere mit Hinterschnitt) aufweist, das zweite Modul, das eine zweite Aussparung (insbesondere mit Hinterschnitt) aufweist, und ein Verbindungselement mit den oben beschriebenen Merkmalen zum Verbinden des ersten Moduls mit dem zweiten Modul aufweist.

Gemäß noch einem anderen Ausführungsbeispiel der vorliegenden Erfindung ist ein Verfahren zum Herstellen eines Verbindungselements zum Verbinden eines ersten Moduls mit einem zweiten Modul geschaffen, wobei bei dem Verfahren ein Rohling (zum Beispiel ein Holzkörper) zum Bilden eines sich von einem Zentralabschnitt des Rohlings aus entlang einer ersten Richtung erstreckenden ersten Eingriffsabschnitts mit Hinterschnitt und zum Bilden eines sich von dem Zentralabschnitt aus entlang einer zweiten Richtung erstreckenden zweiten Eingriffsabschnitts mit Hinterschnitt bearbeitet wird, wobei die zweite Richtung der ersten Richtung entgegengesetzt ist, ein Spalt in dem Zentralabschnitt gebildet wird, und nachfolgend eine sich in den Spalt hinein erstreckende Spreizelementaufnahme zum Aufnehmen eines Spreizelements derart gebildet wird, dass bei Einführen des Spreizelements in die Spreizelementaufnahme sich der erste Eingriffsabschnitt und der zweite Eingriffsabschnitt jeweils verspreizen. Gemäß noch einem anderen Ausführungsbeispiel der vorliegenden Erfindung ist ein Verfahren zum Verbinden eines ersten Moduls mit einem zweiten Modul mittels eines Verbindungselements bereitgestellt, wobei das erste Modul eine erste Aussparung (insbesondere mit Hinterschnitt) aufweist und das zweite Modul eine zweite Aussparung (insbesondere mit Hinterschnitt) aufweist, wobei das Verbindungselement einen Zentralabschnitt, in dem ein Spalt gebildet ist, einen sich von dem Zentralabschnitt aus entlang einer ersten Richtung erstreckenden ersten Eingriffsabschnitt mit Hinterschnitt, einen sich von dem Zentralabschnitt aus entlang einer zweiten Richtung erstreckenden zweiten Eingriffsabschnitt mit Hinterschnitt, wobei die zweite Richtung der ersten Richtung entgegengesetzt ist, eine sich in den Spalt hinein erstreckende Spreizelementaufnahme und das Spreizelement aufweist, wobei bei dem Verfahren der erste Eingriffsabschnitt in die erste Aussparung und in die zweite Aussparung eingeführt wird, der zweite Eingriffsabschnitt in die erste Aussparung und in die zweite Aussparung eingeführt wird und das Spreizelement in die Spreizelementaufnahme derart eingeführt wird, dass mit dem Einführen sich der erste Eingriffsabschnitt in dem ersten Modul und in dem zweiten Modul und der zweite Eingriffsabschnitt in dem ersten Modul und in dem zweiten Modul verspreizt, womit das erste Modul und das zweite Modul mittels des Verbindungselements miteinander lösbar verbunden werden.

Gemäß einem weiteren Ausführungsbeispiel der vorliegenden Erfindung wird ein Verbindungselement mit den oben beschriebenen Merkmalen zum Verbinden eines ersten Möbelstücks als erstes Modul mit einem zweiten Möbelstück als zweites Modul verwendet.

Unter einem Hinterschnitt eines Eingriffsabschnitts wird im Rahmen dieser Anmeldung insbesondere ein körperlicher Überstand des Eingriffsabschnitts verstanden, der einer Verbindungsfläche der beiden zu verbindenden Module abgewandt ist. Zu den Seiten der beiden zu verbindenden Module hin sollte dieser Hinterschnitt konkav (d.h. zumindest abschnittsweise nach innen gewölbt) sein, um eine Verbindungskraft auf die Module ausüben zu können. Der Begriff konkav sollte breit verstanden werden, so dass darunter insbesondere auch eine nicht differenzierbare Form (zum Beispiel als Winkel oder Vieleck mit einspringendem Eck oder einspringenden Ecken geformt) verstanden werden kann. Der Hinterschnitt kann aufgrund seiner Form in eine oder beide korrespondierend geformte Aussparungen der zugehörigen Module derart einführbar (zum Beispiel einschiebbar) sein, dass nach dem Einführen des Verbindungselements entlang einer Einführrichtung ein Herausziehen in einer dazu winkeligen (insbesondere rechtwinkeligen) Befestigungsrichtung aufgrund eines zumindest teilweisen Formschlusses zwischen den hinterschnittenen Eingriffsabschnitten und den Hinterschnittaussparungen erschwert oder unmöglich ist. Anders ausgedrückt bilden der hinterschnittende Eingriffsabschnitt und die Hinterschnittaussparung eine formschlüssige Verbindung an der Außen- oder Profilseite, erlauben vor dem Verspreizen aber noch eine Verschiebung in einer Einführrichtung. Durch das Verspreizen wird dann auch dieser Freiheitsgrad aufgrund einer wirkenden Reibungskraft reversibel erschwert oder sogar gesperrt. Aufgrund des Hinterschnitts erfolgt anschaulich eine Einschnürung der Eingriffsabschnitte zu der Verbindungsebene hin. Der Hinterschnitt muss nicht exakt formschlüssig zu allen Grenzflächen hin wirken, es reicht ein Formschluss entlang eines Teils der Verbindungsfläche.

Im Rahmen dieser Anmeldung wird unter einer "lösbaren Verbindung" eine Verbindung verstanden, die bei bestimmungsgemäßer Deaktivierung eine zerstörungsfreie Demontage der zuvor verbundenen Komponenten ermöglicht.

Die Funktionsweise des Verbindungselements gemäß einem Ausführungsbeispiel der Erfindung beruht darauf, dass dessen beide Eingriffsabschnitte zunächst in zwei entsprechende Aussparungen von miteinander zu verbindenden Modulen eingeführt werden, und zwar mit einem gewissen Spiel, so dass ein Benutzer dieses Einführen bequem und kraftarm bewerkstelligen kann. Nachfolgend hat ein Benutzer nur noch das Spreizelement in die Spreizelementaufnahme einzuführen, womit sich der Spalt im Zentralabschnitt aufweitet und sich dadurch die Eingriffsabschnitte in den entsprechenden Aussparungen des jeweiligen Moduls verkeilen. Dadurch tritt die Befestigungswirkung der beiden Module mittels des Verbindungselements in wieder lösbarer Weise ein. Dies bedeutet, dass nach Bilden dieser festen Verbindung ein Lösen der Verbindung wieder möglich ist, und zwar indem nach dem fachmännischen Verständnis ohne nennenswerte Beschädigung von Verbindungselement oder Modulen das Spreizelement einfach aus der Spreizelementaufnahme wieder herausgeführt wird. Hinsichtlich der Stärke der Festigkeit ist zu sagen, dass mit der Spreizung eine bestimmte befestigende Reibungskraft und Druckkraft einher geht. Durch Einstellen des Spreizungsgrads ist daher auch die Festigkeit benutzerseitig einstellbar, und zwar in ein bis drei Dimensionen.

Anschaulich werden nach Einlegen - vorzugsweise mit geringem Spiel -des Verbindungselements (ohne Spreizelement) in die beiden gegenüberliegenden Aussparungen der Module erst durch Einführen des Spreizelements die Bereiche beidseitig des Spalts durch Aufweitung des Spalts voneinander wegbewegt, womit gegenüberliegende hinterschnittene Endbereiche der beiden Eingriffselemente eine Druckkraft auf angrenzende Oberflächenbereiche der Module ausüben. Dadurch werden die Module kraft- und formschlüssig aneinander gehalten. Die resultierende Haltekraft wird durch die hinterschnittenen Eingriffsabschnitte und dadurch bewirkt, dass jeder Eingriffsabschnitt in beiden Aussparungen der Module verzahnend aufgenommen ist. Dies funktioniert aufgrund von Reibung auch, wenn die Frontansicht des Verbindungselements ein Rechteck ist, also ohne Verzahnung. Die Verzahnung macht das System aber besser. Je nach Richtung kann der Wirkmechanismus unterschiedlich sein.

Bei einem Herstellungsverfahren zum Bilden des Verbindungselements ist besonders vorteilhaft, dass in einem Rohling, zum Beispiel einem Vollkörper (insbesondere aus Holz), durch entsprechende Bearbeitung zunächst in gegenüberliegenden Bereichen ein jeweiliger Eingriffsabschnitt mit Hinterschnitt gebildet wird. Bei dem Herstellungsverfahren wird erst nach dem Bilden der Eingriffsabschnitte der Spalt und erst anschließend die Spreizelementaufnahme teilweise in dem Spalt gebildet. Dies stellt eine materialschonende Vorgehensweise dar, bei der während des Ausbildens der Einzelkomponenten in dem Rohling die bereits gebildeten Komponenten vor einer negativen Beeinflussung während nachfolgender Prozessierungsschritte geschützt sind.

Insbesondere zum einfachen Verbinden modularer Möbelstücke kann das Verbindungselement auch von Privatpersonen, genutzt werden.

Im Weiteren werden weitere Ausgestaltungen des Verbindungselements beschrieben. Diese gelten auch für die Anordnung, die Verfahren und die Verwendung.

Gemäß einem Ausführungsbeispiel kann die Spreizelementaufnahme nur entlang eines Teils der Länge des Zentralabschnitts gebildet sein. Korrespondierend hierzu kann das Spreizelement ebenfalls als kompaktes Bauteil ausgebildet werden, da es in einer Dimension (insbesondere mit einer Länge) ausgeführt sein kann, die der Spreizelementaufnahme entspricht und somit kleiner als die Länge des Zentralabschnitts ist. Dadurch ist eine ressourcensparende, leichtgewichtige und kostensparende Ausgestaltung erreicht, da auch die Montage schnell erfolgen kann, weil ein Benutzer das Spreizelement nur über eine kurze Strecke hinweg in die Spreizelementaufnahme einzuführen braucht.

Gemäß einem Ausführungsbeispiel kann das Verbindungselement eine vorderseitige Stirnfläche und eine hinterseitige Stirnfläche aufweisen, wobei sich der Spalt ausgehend von der hinterseitigen Stirnfläche in den Zentralabschnitt hineinerstreckt und wobei sich die Spreizelementaufnahme ausgehend von der vorderseitigen Stirnfläche in den Zentralabschnitt hineinerstreckt. Unter den beiden Stirnflächen sind diejenigen planaren, einander parallel gegenüberliegenden Flächen des Verbindungselements zu verstehen, deren Normalenvektor parallel zur Einführrichtung ausgerichtet ist. Jedenfalls eine der Stirnflächen ist im montierten Zustand nicht in Berührkontakt mit den jeweiligen Modulen. Gemäß der beschriebenen Ausgestaltung erstreckt sich der Spalt von einem anderen Ende des Verbindungselements aus als die Spreizelementaufnahme. Somit erstrecken sich der Spalt und die Spreizelementaufnahme ausgehend von gegenüberliegenden Ende des Verbindungselements jeweils in Richtung eines Zentrums des Verbindungselements hin. Dies vereinfacht die Montage. Ferner ist bei dieser Ausgestaltung im montierten Zustand der Spalt nicht mehr zu sehen. Die Schraube kann somit auch von der anderen Seite des Spalts in das Verbindungselement (Verbinder) eingedreht werden. Dadurch kann erreicht werden, dass der Betrachter den Spalt von außen nicht sieht, sondern nur das Schraubenloch. Ferner bewirkt diese Maßnahme eine bessere Funktionalität, da der Verbinder wieder leichter aus der Ausnehmung in zwei Möbelmodulen entnommen und gelöst werden kann. Ein solches Ausführungsbeispiel funktioniert besonders gut mit einem Verbinder aus Kunststoff oder einem ähnlichen Material.

Gemäß einem alternativen Ausführungsbeispiel kann das Verbindungselement eine vorderseitige Stirnfläche und eine hinterseitige Stirnfläche aufweisen, wobei sich der Spalt ausgehend von der vorderseitigen Stirnfläche in den Zentralabschnitt hineinerstreckt und wobei sich die Spreizelementaufnahme ausgehend von der vorderseitigen Stirnfläche in den Zentralabschnitt hineinerstreckt. Gemäß dieser Ausgestaltung erstrecken sich der Spalt und die Spreizelementaufnahme von derselben Stirnfläche des Verbindungselements aus. Eine solche Ausführungsform ist besonders bei der Verwendung des Werkstoffs Holz für das Verbindungselement vorteilhaft, da die dann wirkenden Kräfte mit den Eigenschaften von Holz besonders gut kompatibel sind.

Der Spalt kann im montierten Zustand senkrecht zu den kontaktierten Oberflächen der verbundenen Module verlaufen.

Gemäß einem Ausführungsbeispiel wird jeder der genau zwei Eingriffsabschnitte in jeweils beide Aussparungen der beiden zu verbindenden Module eingeführt. Anders ausgedrückt ist jede der Aussparungen der beiden Module in einen ersten Aussparungsbereich unterteilt, der von einem Teil des ersten Eingriffsabschnitts in Eingriff genommen ist, und in einen zweiten Aussparungsbereich unterteilt, der von einem Teil des zweiten Eingriffsabschnitts in Eingriff genommen ist. Dies bewirkt bei nachfolgender Verkeilung eine besonders starke, aber dennoch lösbare Befestigung.

Spreizelementaufnahme und Spalt können als separate Komponenten ausgebildet sein oder können als gemeinsame zusammenhängende Aussparung gebildet sein. Die Spreizelementaufnahme dient funktional dem Aufnehmen des Spreizelements, wohingegen der Spalt dem lateralen Aufweiten des Verbindungselements dient, wenn das Spreizelement in der Spreizelementaufnahme aufgenommen ist.

Das Spreizelement kann in einem Ausführungsbeispiel vollständig in der Spreizelementaufnahme versenkt werden, so dass das Überstehen spitzer Komponenten vermieden werden kann.

Der Spalt und die Spreizelementaufnahme können einstückig oder mehrkomponentig ausgebildet sein. Der Spalt und die Spreizelementaufnahme können als gemeinsame Aussparung oder als separate Aussparungen vorgesehen sein.

Gemäß einem Ausführungsbeispiel kann der Spalt über die gesamte Dicke, aber nur entlang eines Teils der Länge des Zentralabschnitts gebildet sein, wobei die Dicke und die Länge Dimensionen des Verbindungselements senkrecht zu der ersten und der zweiten Richtung sind. Indem entlang der Länge, das heißt der Erstreckungsrichtung des Spreizelements, der Körper des Verbindungselements nur über eine Teilstrecke hinweg mit dem Spalt versehen ist, bleibt in einem anderen Teilabschnitt noch eine ausreichend mechanische Robustheit erhalten, die auch bei Spreizen eine Unversehrtheit des Grundkörpers sicherstellt. Dagegen erlaubt das Ausbilden des Spalts über die gesamte Dicke hinweg (das heißt entlang der Erstreckung senkrecht zu der Erstreckungsrichtung des Spreizelements), dass eine homogene Befestigungskraft durch die Verspreizung oder Verkeilung der Eingriffsabschnitte in den Aussparungen der Module erzeugt werden kann. Die Verkeilung erfasst daher die gesamte Dicke des Körpers. Es sind aber auch zwei separate Eingriffsabschnitte möglich, die hinten in geeigneter Form zusammengehalten werden, so dass eine Spreizung möglich ist. Der Grundkörper (d.h. Verbindungselement exklusive Spreizelement) des Verbindungselements kann somit wahlweise einstoffig oder mehrstoffig sowie einstückig oder mehrkomponentig gebildet sein.

Gemäß einem Ausführungsbeispiel können der erste Eingriffsabschnitt und der zweite Eingriffsabschnitt symmetrisch, insbesondere flächensymmetrisch zu dem Spalt ausgebildet sein. Der Spalt dient dann anschaulich als Spiegelebene. Die flächensymmetrische Anordnung bzw. Ausbildung der beiden Eingriffsabschnitte zueinander (zum Beispiel realisierbar durch einen Doppelschwalbenschwanz) spiegelt sich in einer flächensymmetrischen Kraftverteilung wieder, was zu einer gleichmäßigen Befestigungskraft führt, wenn die Aussparungen auch entsprechend symmetrisch sind. Bei einer Spiegelsymmetrie an dem Spalt und bezüglich der ersten Richtung kann das Verbindungselement bezüglich der Module beliebig angeordnet werden, d.h. dass eine Fehlbedienung weitgehend ausgeschlossen ist. Bei einer Spiegelsymmetrie an nur dem Spalt oder nur bezüglich der ersten Richtung kann definiert werden, auf welche Weise die Module aneinander angebracht werden.

Gemäß einem Ausführungsbeispiel kann in einer Deckfläche des Verbindungselements, welche von der Spreizelementaufnahme in einem Durchstoßpunkt durchstoßen wird, der erste Eingriffsabschnitt und der zweite Eingriffsabschnitt punktsymmetrisch zu dem Durchstoßpunkt ausgebildet sein. Auch eine solche Punktsymmetrie führt zu einer symmetrischen Krafteinleitung zwischen Verbindungselement und Modulen, wodurch die Befestigungskraft verstärkt wird.

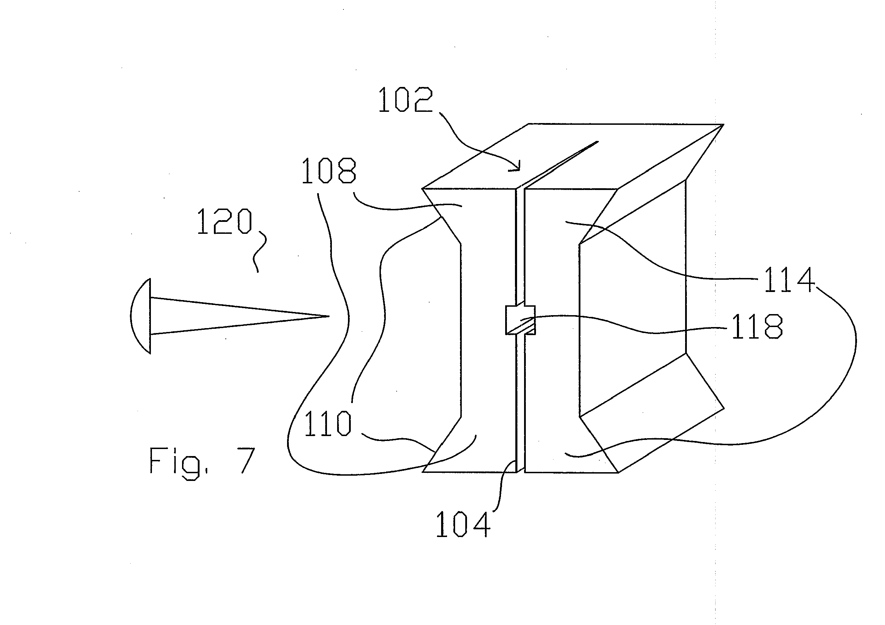

Gemäß einem Ausführungsbeispiel können der in einem der Module eingebettete Teil des ersten Eingriffsabschnitts und der in diesem Modul eingebettete Teil des zweiten Eingriffsabschnitts gemeinsam als Schwalbenschwanz, Schwalbenschwanz, bei dem ein Teil der Kanten oder alle Kanten abgerundet ist oder sind, oder als Quader mit einem oder mehreren Vorsprüngen ausgebildet sein. Die Hinterschnittaussparung sollte aber im weitesten Sinne konkav sein. Ein schwalbenschwanzförmiges Ausgestalten der Eingriffsabschnitte führt zu einer ausgezeichneten Keilwirkung. Auch bei Abrundung der Schwalbenschwänze, anschaulich zum Bilden eines Knochenprofils, ist bei guter Handhabbarkeit eine zuverlässige Befestigungswirkung erreichbar. Gleichzeitig ist eine gefahrlose Handhabung der Eingriffsabschnitte möglich, da diese ohne scharfe Kanten realisiert werden können. Dies ist zum Beispiel bei Ausführungsformen als Kinderspielzeug vorteilhaft. Bei Vorsehen der Eingriffsabschnitte als Quader mit ein- oder mehrseitigen Vorsprüngen kann etwa eine Art Hammerkonfiguration (vergleiche zum Beispiel Fig. 7), insbesondere ein Doppelhammer, gebildet werden, der einen Hinterschnitt zum Ausüben der formschlüssigen Befestigungskraft enthalten kann.

Gemäß einem Ausführungsbeispiel kann das Spreizelement zylindrisch ausgebildet sein und/oder ein Außengewinde zum Eindrehen in die Spreizelementaufnahme aufweisen und/oder keilförmig ausgebildet sein und/oder als gewindefreier Bolzen ausgebildet sein. Bei einer im Wesentlichen zylindrischen Ausgestaltung kann das Spreizelement zum Beispiel ein Nagel sein. Bei gleichzeitigem Vorsehen eines Außengewindes kann das Spreizelement als Schraube ausgestaltet sein. Es ist aber möglich, das Spreizelement als Keil oder dergleichen vorzusehen, so dass der Keil dann in einen aufgeweiteten Abschnitt des Spalts, der die Spreizelementaufnahme bildet, eingetrieben werden kann, um die lösbare Verbindung zu aktivieren. Zum Beispiel mit einem Werkzeug (zum Beispiel eine Zange) oder von Hand kann der Keil dann wieder herausgezogen werden. Eine solche Keilform kann auch in einem Ausführungsbeispiel verwendet werden, bei dem eine nicht lösbare Verbindung geschaffen werden soll. Auch ein gewindefreier Bolzen kann in die Spreizelementaufnahme eingetrieben werden, zum Beispiel eingehämmert werden, um dann die Verspreizung zu bewerkstelligen.

Gemäß einem Ausführungsbeispiel kann eine Stirnfläche des Spreizelements ein Angreifprofil (zum Beispiel mindestens eine korrespondierend geformte Nut oder mindestens ein korrespondierend geformter Überstand) zum Angreifen eines Werkzeugs zum Einführen des Spreizelements in die Spreizelementaufnahme und zum Entfernen des Spreizelements aus der Spreizelementaufnahme aufweisen. Vorteilhaft kann somit zum Beispiel ein Sechskantprofil, ein Schlitz oder ein Kreuzprofil in der Stirnfläche des Spreizelements geformt werden, die senkrecht zu einer Haupterstreckungsrichtung des Spreizelements in der Spreizelementaufnahme angeordnet sein kann. Durch nochmaliges Verwenden des Werkzeugs, zum Beispiel durch Drehen eines Schraubenziehers nun in entgegengesetzter Richtung, kann dann das reversible Entfernen des Spreizelements aus der Spreizelementaufnahme und nachfolgend des Verbindungselements aus der Anordnung erfolgen.

Gemäß einem Ausführungsbeispiel können der erste Eingriffsabschnitt und der zweite Eingriffsabschnitt ein Außenprofilhaben, das entlang der gesamten Ausdehnung parallel zu einer Erstreckungsrichtung der Spreizelementaufnahme gleichbleibend ausgebildet ist. Anders ausgedrückt kann durch das gleichbleibende Profil in einer Einschieberichtung zum Einschieben in eine langgestreckte Nut ein Einschieben des jeweiligen Eingriffsabschnitts in eine entsprechende Aussparung des jeweiligen Moduls auch über eine größere Strecke hinweg erfolgen.

Das Verbindungselement muss nicht komplett in die Aussparungen eingeschoben sein, es kann genau mit den Modulkanten abschließen oder in mindestens einem der Module weiter eingeführt werden. Gemein ist diesen Varianten, dass es einen Bereich gibt, der bei Verspannung formschlüssig die Module zusammenhält. Die Lage dieses Bereiches ist durch den Spalt vorgegeben. Der Formschluss muss allerdings nicht notwendig über den gesamten Bereich des Spalts hinweg erfolgen. Dieser Bereich soll innerhalb beider Module liegen. Das Profil dieses Bereiches gibt die maximalen Ausmaße des Profils für den restlichen versenkten Bereich vor.

Gemäß einem Ausführungsbeispiel kann die Spreizelementaufnahme zylindrisch sein, insbesondere zylindrisch mit einem Innengewinde. Ein solches zylindrisches Loch kann durch entsprechendes Bohren eines Rohlings gebildet werden, der dann im bearbeiteten Zustand gemeinsam mit einem zugehörigen Spreizelement das Verbindungselement bildet. Es ist optional möglich, nach dem Bohren eines solchen zylindrischen Lochs eine selbstschneidende Schraube in die Spreizelementaufnahme einzudrehen, um das Innengewinde zu schneiden. Gemäß einem Ausführungsbeispiel kann der Spalt als Aussparungsebene ausgebildet sein. Gemäß dieser Konfiguration ist der Spalt als flächiger planarer Spalt gebildet, in dessen Dickenrichtung der Spalt eine wesentlich geringere Ausdehnung hat als in zwei dazu orthogonalen Erstreckungsrichtungen. Zum Beispiel kann die Dicke des Spalts höchstens 1/5, insbesondere höchstens 1/10, einer solchen Ausdehnung in den zwei dazu orthogonalen Erstreckungsrichtungen betragen.

Die Spreizelementaufnahme kann geringfügig kleiner als das Spreizelement ausgebildet sein, so dass durch Einführen des Spreizelements in die Spreizelementaufnahme eine Spreizung erfolgen kann.

Gemäß einem Ausführungsbeispiel kann der Spalt entlang der ersten Richtung bzw. der zweiten Richtung eine geringere Ausdehnung als die Spreizelementaufnahme haben. Dagegen kann der Spalt in einer zu der ersten bzw. der zweiten Richtung orthogonalen dritten Richtung, die in einer Oberflächenebene des Verbindungselements liegt, welche von der Spreizelementaufnahme durchstoßen wird, eine größere Ausdehnung als die Spreizelementaufnahme haben. Ein Teil des Spalts kann somit mit der Spreizelementaufnahme zusammenfallen, so dass ein Eintreiben des Spreizelements in die Spreizelementaufnahme unmittelbar zu einer in der ersten und in der zweiten Richtung symmetrischen Aufweitung des Spalts führt, womit eine beidseitig gleichmäßige Krafteinleitung von der Verbindungseinrichtung in die Module erfolgen kann.

Gemäß einem Ausführungsbeispiel kann der Spalt an seiner Stirnseite aufgeweitet sein, insbesondere zylinderförmig aufgeweitet sein. Als Stirnseite des Spalts kann eine Endfläche des Spalts im Inneren des Körpers verstanden werden, an der eine Erstreckung des Spalts in den Körper hinein endet. Durch ein Aufweiten des dünnen quaderförmigen Spaltes an seiner Stirnseite, zum Beispiel in Form einer zylindrischen Bohrung, kann ein unerwünschtes Ausfasern an dieser Stelle bei Einführen und nachfolgendem Herausnehmen des Spreizelements in die Spreizelementaufnahme zuverlässig vermieden werden. Dadurch kann das Verbindungselement auch viele Male verwendet werden, ohne dass durch das reversible Einführen und das nachfolgende Herausnehmen eine Verschlechterung des Verbindungselements zu befürchten ist.

Gemäß einem Ausführungsbeispiel kann das Verbindungselement Holz, insbesondere Massivholz (das heißt Vollholz), aufweisen oder daraus bestehen. Als Vollholz werden Holzerzeugnisse bezeichnet, deren Querschnitte aus einem Baumstamm herausgearbeitet und eventuell spanabhebend (Bohren, Fräsen, Hobeln, etc.) weiterverarbeitet wurden. Andere verwendbare Formen von Holz sind Holzwerkstoffe, die durch Zerkleinern von Holz und anschließendes Zusammenfügen der Strukturelemente erzeugt werden. Beispiele hierfür sind Sperrholz, Holzspanwerkstoffe (Spanplatten) oder Holzfaserwerkstoffe (Hartfaserplatten). Es hat sich herausgestellt, dass Holz ein besonders geeignetes Material für das Verbindungselement ist, das sich in einfacher Weise bearbeiten lässt, um die einzelnen Komponenten des Verbindungselements auszubilden. Gleichzeitig ist Holz ausreichend stabil und kann doch eine gewisse Flexibilität bereitstellen, um auch mehrfach das Verbindungselement verwenden zu können. Vollholz ist aufgrund seiner Eigenschaften als Material für den Grundkörper des Verbindungselements besonders gut geeignet. Andere Materialien für den Grundkörper des Verbindungselements sind jedoch auch möglich, zum Beispiel Metall, Verbundstoffe, Glasfaser, Kautschuk, Stahl oder Kunststoffe. Andere Materialien sind möglich.

Im Weiteren werden weitere Ausgestaltungen der Anordnung beschrieben. Diese gelten auch für das Verbindungselement, die Verfahren und die Verwendung. Gemäß einem Ausführungsbeispiel kann in Einführrichtung des Verbindungselements in die erste Aussparung und die zweite Aussparung das Verbindungselement eine kleinere Länge aufweisen als das erste Modul und/oder das zweite Modul. Unter der Einführrichtung kann dabei jene Erstreckungsrichtung des jeweiligen Moduls bzw. des Verbindungselements verstanden werden, entlang welcher bei bestimmungsgemäßem Einsatz der Anordnung das Verbindungselement in die Aussparungen der Module eingeführt wird. Bei der beschriebenen Ausgestaltung kann das Verbindungselement kürzer ausgestaltet sein als die Module, die mittels des Verbindungselements aneinander zu befestigen sind. Anders als herkömmlich kann damit mit sehr kleinvolumigen und kompakten Verbindungselementen sowie mit großen Modulen gearbeitet werden. Dies beruht auf der Erkenntnis, dass aufgrund der außergewöhnlich starken Haltekraft der Verbindungselemente es bereits ausreicht, dass zwei Module entlang einer relativ kurzen Strecke mittels des Verbindungselements miteinander verbunden werden und dass es erfindungsgemäß entbehrlich ist, entlang der gesamten Erstreckung der Module das Verbindungselement vorzusehen. Dies führt zu einer kompakten, leichtgewichtigen und einfach zu handhabbaren Verbindungsanordnung.

Gemäß einem Ausführungsbeispiel können der erste Eingriffsabschnitt und der zweite Eingriffsabschnitt jeweils nur teilweise die erste Aussparung und die zweite Aussparung ausfüllen. Insbesondere kann bei dieser Ausgestaltung die Aussparung entlang einer gesamten Seitenfläche des Moduls ausgebildet sein. Ein Verbindungselement kann dann zum Beispiel nur in einen Anfangsbereich der Aussparung eingeführt werden. Oder es können zwei Verbindungselemente in einen Anfangsbereich bzw. in einen Endbereich der Aussparung eingeführt werden, so dass ein Zwischenbereich zwischen Anfangsbereich und Endbereich materialfrei verbleiben kann. Es ist herstellungstechnisch besonders kostengünstig, die Aussparung (zum Beispiel Grate) über die gesamte Seitenfläche hinweg auszubilden, so dass zwei korrespondierende Aussparungen gemeinsam ein Durchgangsloch (anstelle eines Sacklochs) ausbilden. Die Verbindungselemente erstrecken sich dann nur über einen Teil der Länge der jeweiligen Aussparung in diese Aussparung hinein.

Gemäß einem alternativen Ausführungsbeispiel können der erste Eingriffsabschnitt und der zweite Eingriffsabschnitt die erste Aussparung und die zweite Aussparung vollständig ausfüllen. Gemäß dieser Ausgestaltung kann die Dimension einer Aussparung (wobei zwei korrespondierende Aussparungen gemeinsam ein Sackloch ausbilden) auf die Dimension des Verbindungselements angepasst sein. Anders ausgedrückt können eine Länge der Aussparung und eine Länge des jeweiligen Verbindungselements in Einführrichtung gleich sein (bzw. bis auf Unterschiede, die auf technisch bedingtem Spiel beruhen, gleich sein). Dann schließt im montierten Zustand das Verbindungselement mit einer Deckfläche der aneinander montierten Module bündig ab, und es sind Hohlräume im Inneren der aneinander montierten Module vermieden.

Gemäß einem Ausführungsbeispiel kann die Länge des Verbindungselements höchstens ungefähr 1/2, bevorzugt höchstens ungefähr 1/3, besonders bevorzugt höchstens ungefähr 1/4 der Länge des ersten Moduls und/oder des zweiten Moduls sein. Zum Beispiel kann die Länge des Verbindungselements zwischen 1% und 25% der Länge der Module in der Einführrichtung des Verbindungselements betragen. Es hat sich herausgestellt, dass bereits diese kurzen Verbindungsabschnitte ausreichen, um auch großvolumige Module miteinander zuverlässig zu verbinden. Gemäß anderen Ausgestaltungen kann allerdings die Länge der Verbindungselemente größer als 1/4 sein, zum Beispiel zwischen 10% und 80%, insbesondere zwischen 20% und 50 %.

Gleichzeitig kann gemäß einem Ausführungsbeispiel die Länge des Verbindungselements mindestens 1%, insbesondere mindestens 5%, der Länge des ersten Moduls und/oder des zweiten Moduls betragen. Damit kann eine zuverlässige Haltewirkung zwischen dem ersten und zweiten Modul bewirkt werden und unerwünschtes Trennen der Module verhindert werden. Gemäß einem Ausführungsbeispiel kann oder können das erste Modul und/oder das zweite Modul jeweils als hohler Quader mit mindestens einer Seitenwand ausgebildet sein, wobei in der Seitenwand die jeweilige Aussparung oder Aussparungen gebildet ist oder sind. Die Aussparungen können dabei in Richtung des Innenraums des hohlen Quaders weisen oder an derjenigen Seite der Seitenwand des Quaders ausgebildet sein, die in die entgegengesetzte Richtung nach außen weist. Derartige Quader, bei denen die Aussparungen an der äußeren Seite der Seitenwand des Quaders ausgebildet sind, können in beliebiger Weise einander angestückt werden, um es zu ermöglichen, daraus beliebige Möbelstücke wie zum Beispiel Schränke, Betten oder Kommoden zu bauen.

Gemäß einem Ausführungsbeispiel kann das erste Modul als erste Seitenwand und kann das zweite Modul als zweite Seitenwand ausgebildet sein, wobei in den Seitenwänden die jeweilige Aussparung derart korrespondierend miteinander gebildet sein kann, dass zum Ausbilden einer Eckverbindung mittels Einführens des Verbindungselements in die Aussparungen die erste Seitenwand mit der zweiten Seitenwand winklig, insbesondere rechtwinklig, verbunden ist. Daher kann das erfindungsgemäße Verbindungselement nicht nur zum Ausbilden von Verbindungen zwischen zueinander parallelen Seitenwänden in benachbarten Modulen verwendet werden, sondern auch zum Ausbilden von Eckverbindungen zwischen flächigen Platten, die zum Beispiel orthogonal aneinander angrenzen.

Gemäß einem Ausführungsbeispiel können die Aussparungen des ersten Moduls und des zweiten Moduls symmetrisch und/oder in gleicher Dimension (insbesondere in gleichen Randabständen zu jeweiligen Modulenden) angeordnet sein, womit unterschiedliche Module durch einen Benutzer flexibel verbindbar sind. Bei einer solchen Anordnung es ermöglicht, dass ganz unterschiedliche Module miteinander verbunden werden können, da bei Aneinandersetzen der entsprechenden Module die entsprechenden Aussparungen jeweils eine gemeinsame Aussparung bilden, welche der Geometrie des Verbindungselements entspricht.

Gemäß einem Ausführungsbeispiel kann oder können das erste Modul und/oder das zweite Modul jeweils genau eine Aussparung mit Hinterschnitt aufweisen, in die jeweils das/die Verbindungselement(e) eingreifen können.

Gemäß einem Ausführungsbeispiel kann oder können das erste Modul und/oder das zweite Modul mindestens eine weitere Aussparung mit Hinterschnitt aufweisen, insbesondere parallel zu der ersten Aussparung verlaufend. Insbesondere können die beiden Module jeweils vier Aussparungen an jeder der Seitenwände enthalten, womit eine flexible Verbindung der Module ermöglicht ist. Die mehreren Aussparungen pro Modul können so ausgebildet sein, dass die Einführrichtungen von Verbindungselementen in die entsprechenden Aussparungen zueinander parallel sind. Die mehreren Aussparungen pro Modul können aber auch derart ausgestaltet sein, dass die Einführrichtungen von Verbindungselementen in entsprechenden Aussparungen zueinander einen rechten Winkel bilden, es ist zudem möglich, dass die Einführrichtungen von Verbindungselementen pro Modul zueinander einen beliebigen Winkel bilden.

Gemäß einem Ausführungsbeispiel kann bei Einsatz des lösbaren Verbindungselements ein Benutzer aus einem Satz von verschiedenen Quadern/Kuben Möbel selbst bauen und umbauen (zum Beispiel Schreibtisch, Bett, Regale). Dadurch kann ein Möbelstückensemble, ein System bzw. eine Kombinationsanordnung von Modulen bereitgestellt werden, bei denen die Module mit im Wesentlichen rechteckigen Querschnitt , beispielsweise als hohle Quader ausgebildete Module oder als im Querschnitt rechteckige plattenförmige Module, an mindestens zwei gegenüberliegenden Seitenflächen des Moduls Gratausnehmungen in regelmäßigem Abstand haben. Die Module können neben- und/oder übereinandergesetzt werden und mittels der Verbindungselemente verbindbar sein. Die Gratausnehmungen können bevorzugt am Rand einer Seitenfläche angeordnet sein. Sie können sich paarweise gegenüberliegen (d.h. an der vorderen und hinteren Seite), so dass sich bei einem quaderförmigen Modul mindestens an jeder der vier Seitenflächen des Moduls mindestens eine Gratausnehmung befinden kann. Offene Gratausnehmungen können mit einem Füllelement oder einer Blende abgedeckt sein.

Im in die Module eingesetzten Zustand erstreckt sich der Spalt des Verbindungselements in die Aussparungen beider Module hinein.

Gemäß einem Ausführungsbeispiel kann die erste (insbesondere hinterschnittene) Aussparung als erste Gratleiste in einem Oberflächenbereich des ersten Moduls gebildet sein und/oder die zweite (insbesondere hinterschnittene) Aussparung als zweite Gratleiste in einem Oberflächenbereich des zweiten Moduls gebildet sein. Unter einer Gratleiste kann eine (insbesondere hinterschnittene) Nut verstanden werden, die in eine planare Oberfläche eines Moduls eingearbeitet werden kann. Mit anderen Worten muss eine Gratleiste nicht unbedingt durch Aufsetzen eines über eine Oberflächenebene des Moduls sich hinaus erstreckende separate Komponente wie zum Beispiel eine Aufsatzleiste realisiert werden (obwohl dies in einem Ausführungsbeispiel möglich ist), vielmehr kann die Gratleiste im Inneren der Modulwand und somit einstückig mit dieser gebildet werden. Dadurch ist auch ein direkt aneinander angrenzendes Anordnen, zum Beispiel mit unmittelbarem Kontakt zueinander, der beiden Module möglich, da sich dann die gesamte Ausdehnung des Verbindungselements in den beiden Gratleisten der beiden unmittelbar aneinander angrenzenden Module integrieren kann. Dies stellt eine platzsparende und zuverlässige Verbindung der beiden Module sicher. Die Stirnseite der Aussparungen soll am Rand des Moduls liegen, so dass man das Verbindungselement einführen kann.

Gemäß einem Ausführungsbeispiel kann oder können das erste Modul und/oder das zweite Modul jeweils als hohler Quader (oder quaderförmiger Hohlkörper) mit mindestens einer Seitenwand (die eine ebene Außenfläche haben kann) ausgebildet sein. In der Seitenwand kann die jeweilige Aussparung gebildet sein. Somit kann ein Inneres der beiden Module einen Aufnahmeraum, zum Beispiel Regale und/oder Schubladen, aufweisen. An der Seitenwand oder den Seitenwänden eines solchen hohlen Quaders kann oder können dann beliebig viele hinterschnittene Aussparungen, zum Beispiel in Form von Gratleisten angebracht werden. Diese können zum Beispiel symmetrisch und/oder in gleicher Dimension angeordnet werden, um eine größtmögliche Flexibilität bei der Verbindung unterschiedlicher Module durch einen Benutzer zu ermöglichen.

Gemäß einem Ausführungsbeispiel kann oder können das erste Modul und/oder das zweite Modul mindestens eine weitere Aussparung mit Hinterschnitt aufweisen, insbesondere parallel zu der ersten Aussparung verlaufend. Somit kann eine Mehrzahl von Aussparungen in einem einzigen Modul vorgesehen sein, wobei die Aussparungen logisch (insbesondere hinsichtlich Beabstandung voneinander und zu Kanten des Moduls) so angeordnet werden können, dass eine flexible Verbindung mit beliebigen anderen Modulen möglich ist. Aus einem Satz von mindestens drei Modultypen kann ein Benutzer dann eine beliebige Kombination von mindestens zwei Modulen herausgreifen und diese in einer benutzerdefinierbaren Weise unter Verwendung eines oder mehrerer Verbindungselemente miteinander verbinden. Insbesondere ist bei Aneinanderstellen mehrerer Module nebeneinander auch eine Mehrfachbefestigung an zwei oder mehr zueinander parallelen Aussparungen der beiden Module möglich, um die Befestigungswirkung weiter zu verstärken.

Gemäß einem Ausführungsbeispiel kann bei dem ersten Modul und/oder dem zweiten Modul mindestens eine weitere Aussparung in derselben Seitenwand gebildet sein, in der auch die andere Aussparung gebildet ist. Alternativ oder ergänzend kann bei dem ersten Modul und/oder dem zweiten Modul mindestens eine weitere Aussparung in einer anderen Seitenwand als jener gebildet sein, in der die andere Aussparung gebildet ist. Somit kann gemäß einem Ausführungsbeispiel eine Seitenwand mit mehreren Aussparungen versehen sein. Gemäß einem anderen Ausführungsbeispiel können unterschiedliche Seitenwände vorgesehen sein, von denen jede mindestens eine, vorzugsweise aber mehrere, der Aussparungen aufweisen kann.

Gemäß einem Ausführungsbeispiel kann oder können das erste Modul und/oder das zweite Modul Holz, insbesondere schichtverleimtes Holz, aufweisen oder daraus bestehen. Unter schichtverleimtem Holz kann ein Laminat aus mehreren Holzschichten verstanden werden, die miteinander mittels Holzleims verbunden sind. Schichtverleimtes Holz ist kostengünstig und eignet sich dennoch vorzüglich als Material für die Module, insbesondere wenn diese mit einem Vollholzverbindungselement verbunden werden sollen. Wenngleich Holz nicht das einzige Material ist, das für die Module verwendet werden kann, so hat sich Holz doch als ein besonders geeignetes Material herausgestellt. Holz hat eine ausreichende Flexibilität, um die Spannungen beim Verkeilen abzufangen, so dass auch in den Holzmodulen keine Schädigung eintritt, wenn mehrere Male ein Verbindungselement in die entsprechenden Aussparungen eingeführt wird und nachfolgend wieder daraus entfernt wird. Gleichzeitig weist Holz aber eine ausreichende Festigkeit auf.

Gemäß einem Ausführungsbeispiel kann ein Schwindmaß des Materials des ersten Moduls und/oder des zweiten Moduls größer als oder gleich wie ein Schwindmaß des Materials des Verbindungselements gewählt werden. Das Schwindmaß ist ein Kennwert für die hygroskopischen Eigenschaften von Holz und Holzwerkstoffen, der die Dimensionsveränderung eines Werkstücks abhängig vom Wassergehalt beschreibt. Als Schwindmaß wird insbesondere die Veränderung bei der Abgabe der enthaltenen Feuchte bezeichnet (Schwindung). Wenn das angegebene Verhältnis der Schwindmaße vorliegt, ist eine zuverlässige lösbare Verbindung bereitgestellt, die auch bei Entweichen von im Holz noch enthaltener Restfeuchte dauerhaft aufrechterhalten bleibt.

Gemäß einem Ausführungsbeispiel kann die Anordnung zumindest ein Füllelement aufweisen, das zum Füllen eines von einem jeweiligen Eingriffsabschnitt freien Abschnitts der jeweiligen Aussparung derart eingerichtet ist, dass der mit dem Füllelement gefüllte Abschnitt bündig (oder eben) mit einer umgebenden Oberfläche des jeweiligen Moduls abschließt. Ein solches Füllelement kann optional vorgesehen sein, um Abschnitte der Aussparungen der Modulwände aufzufüllen und damit scharfe Kanten zu vermeiden. Somit schließt auch dann, wenn die Eingriffsabschnitte nur teilweise die Aussparungen der Module ausfüllen, dank eines oder mehrerer Füllelements das entsprechende Modul auch nach der Befestigung plan mit der Umgebung ab, wobei die Füllelemente bequem in die Module eingeführt (insbesondere eingeschoben) werden können, selbst nachdem die Befestigung bereits realisiert worden ist. Eine Befestigungskraft der Füllelemente in den Aussparungen kann zum Beispiel (zum Beispiel rein) reibschlüssig sein.

Im Weiteren werden weitere Ausgestaltungen des Herstellungsverfahrens beschrieben. Diese gelten auch für das Verbindungselement, die Anordnung, das Verbindungsverfahren und die Verwendung.

Gemäß einem Ausführungsbeispiel kann ein (zum Beispiel quaderförmiger) Rohling zum Bilden des ersten und des zweiten Eingriffsabschnitts mittels Fräsens bearbeitet werden. Fräsen, insbesondere von Holzquadern oder Holzleisten als Rohling, ist eine einfache aber zuverlässige Methode mit hoher Präzision, um die Eingriffsabschnitte auszubilden.

Gemäß einem Ausführungsbeispiel kann das Bilden des Spalts (mit abgerundeter Stirnfläche) ein Bohren eines Lochs senkrecht zu der ersten und der zweiten Richtung und senkrecht zu einer Erstreckungsrichtung der Spreizelementaufnahme, und ein (insbesondere nachfolgendes) Sägen einer Aussparungsebene zwischen dem Loch und einer Oberflächenebene des Verbindungselements aufweisen, wobei sich die Aussparungsebene senkrecht zu der ersten und der zweiten Richtung erstreckt. Das Sägen kann ausgehend von der Oberflächenebene hin zu dem Loch erfolgen. Somit kann die Spaltbildung zunächst durch Bohren zum Festlegen der Stirnfläche des Spalts erfolgen. Dies definiert nicht nur den Endbereich des Spalts, sondern sorgt an dieser Stelle auch für einen Schutz vor Ausfransen bzw. für ein Ausbilden einer Drehkante, um welche die Drehung zum Bilden der Verkeilung erfolgt. Wenn dann zum Beispiel mit einer Laubsäge die Spaltebene gebildet wird, so ist dies ebenfalls mit geringem Aufwand und mit hoher Präzision möglich.

Gemäß einem Ausführungsbeispiel kann zum Bilden der Spreizelementaufnahme ein Langloch senkrecht zu der ersten und der zweiten Richtung durch zumindest einen Teil des Spalts ausgehend von einer Oberflächenebene des Verbindungselements gebohrt werden. Gemäß diesem Ausführungsbeispiel, das insbesondere mit der Fräsung der Eingriffsabschnitte und dem Bohren und Sägen des Spalts verbunden werden kann, wird erst nach der Bildung des Spaltes die Spreizelementaufnahme zum Beispiel in zylindrischer Weise durch Eindrehen einer Schraube gebildet.

Im Weiteren wird eine weitere Ausgestaltung des Verbindungsverfahrens beschrieben. Diese gilt auch für das Verbindungselement, die Anordnung, das Herstellungsverfahren und die Verwendung.

Gemäß einem Ausführungsbeispiel kann bei dem Verfahren das Spreizelement aus der Spreizelementaufnahme derart herausgeführt werden, dass mit dem

Herausführen die Verspreizung des ersten Eingriffsabschnitts in den Modulen aufgehoben wird und mit dem Herausführen die Verspreizung des zweiten Eingriffsabschnitts in den Modulen aufgehoben wird, womit das erste Modul von dem zweitem Modul gelöst wird. Somit ist durch bloßes Herausnehmen (zum Beispiel Herausschrauben in entgegengesetzter Richtung zum vorherigen Hineinschrauben) des Spreizelements aus der Spreizelementaufnahme die Verbindung zerstörungsfrei lösbar und das Verbindungselement aus den Aussparungen in den Modulen kraftfrei bzw. kraftarm entnehmbar. Mit dem Herausführen tritt eine Entspreizung ein, so dass die Verbindung gelöst wird.

Im Folgenden werden exemplarische Ausführungsbeispiele der vorliegenden Erfindung mit Verweis auf die folgenden Figuren detailliert beschrieben.
- Fig. 1: zeigt eine räumliche Ansicht eines Verbindungselements gemäß einem exemplarischen Ausführungsbeispiel der Erfindung.
- Fig. 2: zeigt eine Vielzahl von unterschiedlichen Modulen, die mit erfindungsgemäßen Verbindungselementen, wie in Fig. 1 gezeigt, in vielen Kombinationen miteinander verbunden werden können.
- Fig. 3: zeigt eine Verbindungsanordnung gemäß einem exemplarischen Ausführungsbeispiel der Erfindung, bei der mittels eines Verbindungselements aus Vollholz zwei Modulwände aus verleimten Holzschichten miteinander lösbar aber fest verbunden werden können.
- Fig. 4: zeigt eine Verbindungsanordnung gemäß einem anderen exemplarischen Ausführungsbeispiel der Erfindung, bei welcher sich das Verbindungselement durch eine Deckfläche einer der zu

- Fig. 5: verbindenden Module erstreckt und die Geometrie der Eingriffsabschnitte gegenüber Fig. 3 abweicht. zeigt einen Teil eines Verbindungselements gemäß einem exemplarischen Ausführungsbeispiel der Erfindung, das ein abgerundetes Schwalbenschwanzprofil oder ein Knochenprofil aufweist.
- Fig. 6: zeigt ein Verbindungselement gemäß einem anderen exemplarischen Ausführungsbeispiel der Erfindung, bei dem das Spreizelement als Keil und die Spreizelementaufnahme als keilförmige Verdickung des Spalts im Einführbereich ausgebildet ist.
- Fig. 7: zeigt ein Verbindungselement gemäß einem anderen exemplarischen Ausführungsbeispiel der Erfindung, bei dem das Spreizelement ein Nagel ist und der zu spreizende Körper mit zwei im Wesentlichen U-förmigen Hälften gebildet ist.
- Fig. 8: zeigt ein Verbindungselement mit einem Doppelschwalbenschwanz gemäß einem exemplarischen Ausführungsbeispiel der Erfindung.
- Fig. 9: zeigt ein Verbindungselement mit einem Doppelschwalbenschwanz mit abgerundeten Kanten als Knochenprofil gemäß einem exemplarischen Ausführungsbeispiel der Erfindung.
- Fig. 10: zeigt ein Verbindungselement gemäß einem exemplarischen Ausführungsbeispiel der Erfindung, bei dem die Spreizelementaufnahme zum Aufnehmen eines Keils als Spreizelement ausgebildet ist.

- Fig. 11: zeigt ein Verbindungselement gemäß einem exemplarischen Ausführungsbeispiel der Erfindung, dass sich von Fig. 10 dadurch unterscheidet, dass Kanten abgerundet sind.
- Fig. 12a: zeigt eine Verbindungsanordnung mit einem Verbindungselement gemäß einem exemplarischen Ausführungsbeispiel der Erfindung, bei dem das Verbindungselement nicht über den gesamten Bereich formschlüssig ist.
- Fig. 12b bis Fig. 12d: zeigen Verbindungsanordnungen gemäß exemplarischen Ausführungsbeispielen der Erfindung, bei denen nicht planare Modulvarianten eingesetzt sind.
- Fig. 13 und Fig. 14: zeigen Verbindungsanordnungen gemäß exemplarischen Ausführungsbeispielen der Erfindung, bei denen mittels eines Verbindungselements eine Eckverbindung ausgebildet ist.
- Fig. 15 bis Fig. 17: zeigen quaderförmige Module für Verbindungsanordnungen gemäß exemplarischen Ausführungsbeispielen der Erfindung, bei denen in Seitenwänden Aussparungen zum Verbinden unterschiedlicher Module ausgebildet sind.
- Fig. 18 und Fig. 19: zeigen Draufsichten von Verbindungselementen gemäß exemplarischen Ausführungsbeispielen der Erfindung.
- Fig. 20 und Fig. 21: zeigen eine Draufsicht und eine räumliche Ansicht von Komponenten eines Verbindungselements gemäß einem exemplarischen Ausführungsbeispiel der Erfindung.
Gleiche oder ähnliche Komponenten in unterschiedlichen Figuren sind mit gleichen Bezugsziffern versehen.

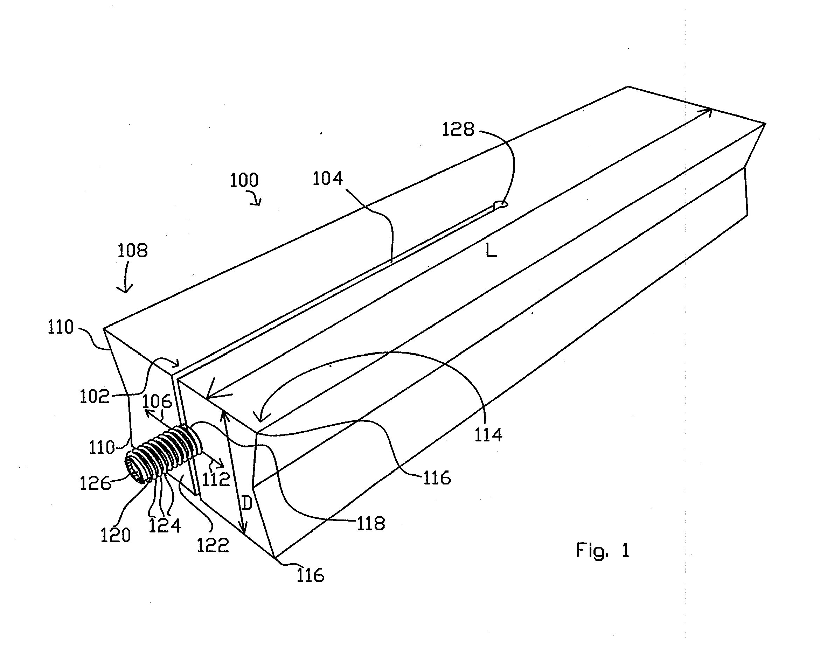

Im Weiteren wird Bezug nehmend auf **Fig. 1** ein Verbindungselement 100 gemäß einem exemplarischen Ausführungsbeispiel der Erfindung beschrieben.

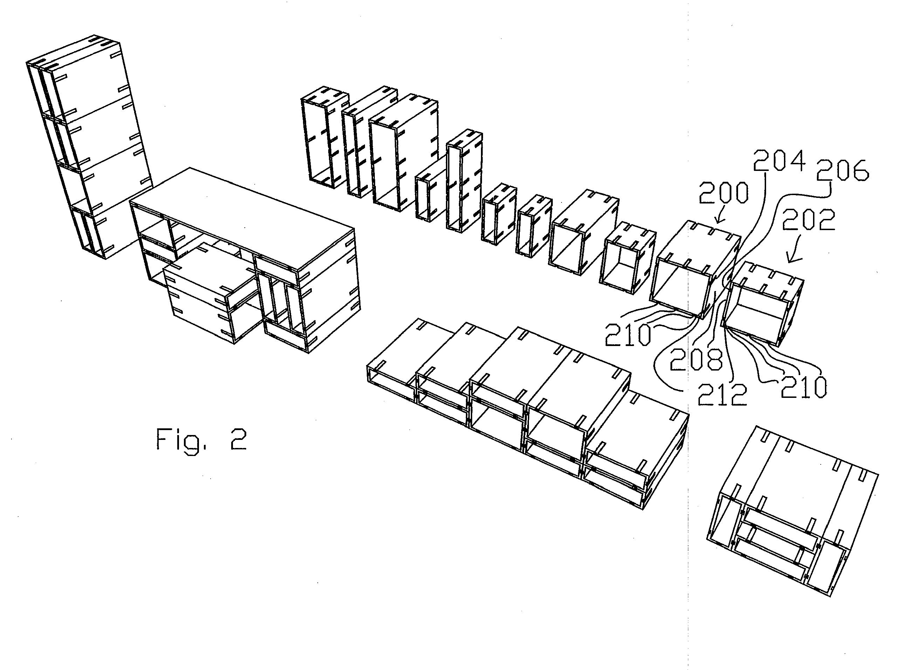

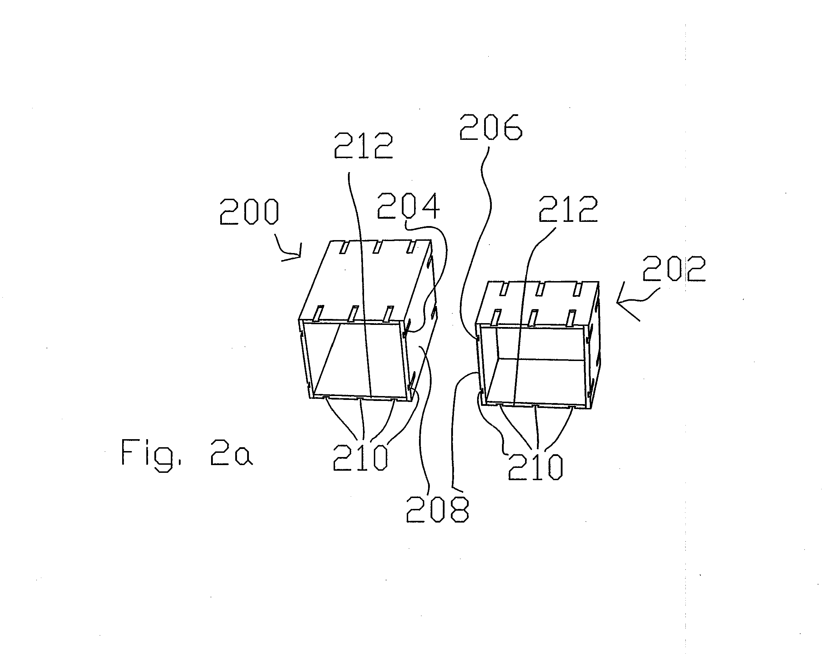

Das Verbindungselement 100 ist zum Verbinden eines in Fig. 1 nicht gezeigten ersten Moduls mit einem in Fig. 2 nicht gezeigten zweiten Modul eingerichtet und ist aus einem im Wesentlichen quaderförmigen bzw. im Wesentlichen leistenförmigen Holzrohling als Grundkörper hergestellt. In einem Zentralabschnitt 102 des Grundkörpers ist ein dünner Spalt 104 gebildet.

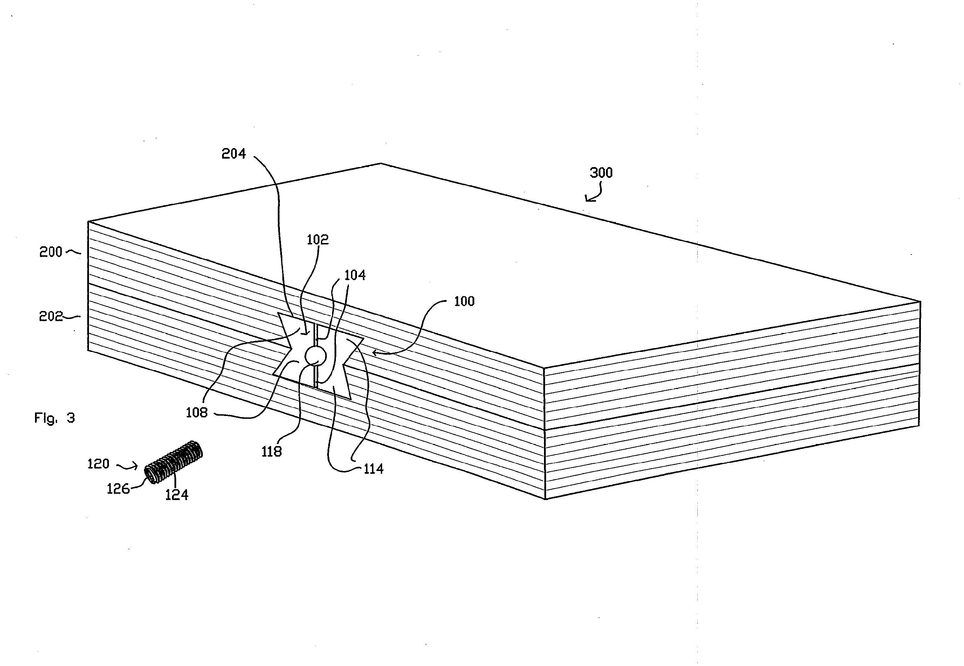

Ausgehend von dem Zentralabschnitt 102 erstreckt sich entlang einer ersten Richtung 106 ein erster Eingriffsabschnitt 108 in Form eines ersten Schwalbenschwanzprofils, der einen Hinterschnitt 110 aufweist. Das erste Schwalbenschwanzprofil ist zum Einführen in korrespondierend ausgebildete Abschnitte einer Aussparung der beiden zugehörigen Module ausgestaltet (siehe Fig. 3).

Entlang einer zweiten Richtung 112, die der ersten Richtung 106 entgegengesetzt ist (das heißt gegenüber der ersten Richtung um einen Winkel von 180° oder ungefähr 180° verdreht ist), erstreckt sich als zweiter Eingriffsabschnitt 114 ein zweites, an dem Spalt 104 symmetrisch gespiegelt angeordnetes Schwalbenschwanzprofil ebenfalls mit Hinterschnitt 116. Das zweite Schwalbenschwanzprofil ist zum Einführen in korrespondierend ausgebildete andere Abschnitte der Aussparungen der beiden zugehörigen Module ausgestaltet (siehe Fig. 3).

In den Spalt 104 hinein erstreckt sich eine Spreizelementaufnahme 118 in Form einer zylinderförmigen Bohrung mit Gewinde zum Aufnehmen eines Schraubenkörpers mit Außengewinde als Spreizelement 120. Wenn das Spreizelement 120 nicht in der Spreizelementaufnahme 118 eingeführt ist, befindet sich der bearbeitete Vollholzrohling in einem spannungsfreien Zustand und kann in den jeweiligen Aussparungen der zu verbindenden Module mit einem gewissen Spiel bewegt werden, zum Beispiel in eine Gratleiste eingeschoben werden. Wird allerdings das Spreizelement 120 in die Spreizelementaufnahme 118 eingeführt, so werden die beiden Eingriffsabschnitte 108, 114 vom Zentralabschnitt 102 aus nach außen gedrückt und der Spalt 104 weitet sich auf. Somit verspreizt sich mit dem Einführen des Spreizelements 120 der erste Eingriffsabschnitt 108 in den entsprechenden Aussparungsabschnitten des ersten Moduls und des zweiten Moduls und der zweite Eingriffsabschnitt 114 in den anderen entsprechenden Aussparungsabschnitten des ersten Moduls und des zweiten Moduls. Durch diese Verspreizung werden die verkeilten Eingriffsabschnitte 108 bzw. 114 in den Aussparungen verklemmt oder verkeilt, was eine Befestigung zwischen den Modulen mittels des Verbindungselements 100 bewerkstelligt. Erst durch ein Herausdrehen des Spreizelements 120 aus der Spreizelementaufnahme 118 wird die Verkeilung reversibel rückgängig gemacht, so dass nach dem Entfernen des Spreizelements 120 aus der Spreizelementaufnahme 118 das unverkeilte Verbindungselement 110 mit geringem Kraftaufwand aus den beiden Aussparungen in den benachbarten Module herausgezogen werden kann. Die Module sind dann wieder getrennt.

Wie aus Fig. 1 erkennbar ist, ist der Spalt 104 über die gesamte Dicke D hinweg, aber nur entlang eines Teilabschnitts der Länge L des Zentralabschnitts 102 gebildet. Die Dicke D und die Länge L sind Dimensionen des Verbindungselements 100 senkrecht zu der ersten Richtung 106 bzw. zu der zweiten Richtung 112. Dadurch kann ein Endabschnitt des Verbindungselements 100, das von dem Spalt 104 frei ist (das heißt gemäß Fig. 1 der Bereich hinter Bezugszeichen 128) zur Stabilisierung beitragen.

Die Gestalt eines Querschnitts von Eingriffsabschnitt 108 ergibt sich durch Spiegelung des Eingriffsabschnitts 114 an einer Achse, die durch den Spalt 104 in der Querschnittsebene gebildet wird. Anders ausgedrückt sind die Eingriffsabschnitte 108, 114 zueinander bezogen auf Spalt 104 spiegelsymmetrisch ausgebildet. Ein Durchstoßpunkt der Spreizelementaufnahme 118 durch eine (gemäß Fig. 1 vorderseitige) Oberflächenebene 122 des Verbindungselements 100 bildet einen Spiegelpunkt, bezüglich welchem der erste Eingriffsabschnitt 108 zu dem zweiten Eingriffsabschnitt 114 als Doppelschwalbenschwanzprofil in der Oberflächenebene 122 punktsymmetrisch ist. In der Oberflächenebene 122, das heißt der Stirnfläche des Verbindungselements 100, liegt die Spreizelementaufnahme 118 in einem geometrischen Schwerpunkt.

In der Längsrichtung (siehe Bezugszeichen L) senkrecht zu der Oberflächenebene 122 bleibt das Profil der Eingriffsabschnitte 108, 114 entlang der gesamten Erstreckung des Verbindungselements 100 durchgehend und gleichbleibend schwalbenschwanzförmig. Dadurch kann das Verbindungselement 100 in eine entsprechend geformte Nut eines Moduls über eine größere Dimension hinweg eingeschoben werden.

Wie in Fig. 1 gezeigt, ist an der Stirnfläche des Spreizelements 120 ein Sechskantprofil 126 zum Angreifen durch ein korrespondierendes Sechskantwerkzeug (nicht gezeigt) als Nut gebildet. Das Sechskantwerkzeug dient zum Eindrehen des als Schraube ausgebildeten Spreizelements 120 in die Spreizelementaufnahme 118 bzw. zum Herausdrehen des Spreizelements 120 aus der Spreizelementaufnahme 118.

An seiner Stirnseite 128 ist der Spalt 104 zylinderförmig aufgeweitet. Anders ausgedrückt kann ein Ausfransen oder Ausfasern in einem solchen Endbereich des Spalts 104 dadurch vermieden werden, dass dieser Endbereich durch ein zylindrisches Loch stabilisiert wird.

**Fig. 2** zeigt eine Vielzahl von unterschiedlichen Modulen, darunter ein erstes Modul 200 und ein zweites Modul 202, die allesamt mit Verbindungselementen 100 in beliebiger benutzerdefinierbarer Kombination miteinander dauerhaft, aber lösbar verbunden werden können. Seitenwände 208 des ersten Moduls 200 sind mit Aussparungen 204 versehen, und Seitenwände 208 des zweiten Moduls 202 sind mit Aussparungen 206 versehen sind. Ferner sind Wände 212 mit Aussparungen 210 versehen. Wenn Seitenwände 208 zweier Module 200, 202 aneinander mit Kontakt aneinander angelegt sind, bilden deren Aussparungen 204, 206 gemeinsam Doppelschwalbenschwanzaussparungen oder allgemeiner ausgedrückt Doppelprofilaussparungen, die entsprechend einem Doppelprofil als Verbindungselement ausgestaltet sind.

Fig. 2 zeigt eine Vielzahl von Möbelmodulen, die alle miteinander modular kombiniert werden können und mittels Verbindungselementen 100 gemäß Fig. 1 miteinander fest verbunden werden können. Gleichzeitig kann eine Lösbarkeit der Möbelmodule durch die Aufhebung der Verkeilwirkung erreicht werden. Zum Beispiel kann das Verbindungselement 100 gemäß Fig. 1 zum Verbinden der Seitenwände 208 der beiden Module 200, 202 eingesetzt werden.

**Fig. 2a** zeigt eine vergrößerte Ansicht der beiden Module 200, 202.

**Fig. 3** zeigt eine Verbindungsanordnung 300 gemäß einem Ausführungsbeispiel, bei dem zwei Module 200, 202 als schichtverleimte Holzwände gezeigt sind, die bündig aneinander anliegend mittels eines Verbindungselements 100 verbunden sind. Zunächst wird das Verbindungselement 100 von Hand in die Aussparungen der Module 200, 202 eingeführt und dann mittels des Spreizelements 120 mit den Modulen 200, 202 verkeilt. Fig. 3 zeigt eine Verbindungsfläche der beiden Module 200, 202 mit Bezugszeichen 302, Stirnflächen der Module 200, 202 mit Bezugszeichen 304 sowie Seitenflächen der Module 200, 202 mit Bezugszeichen 306.

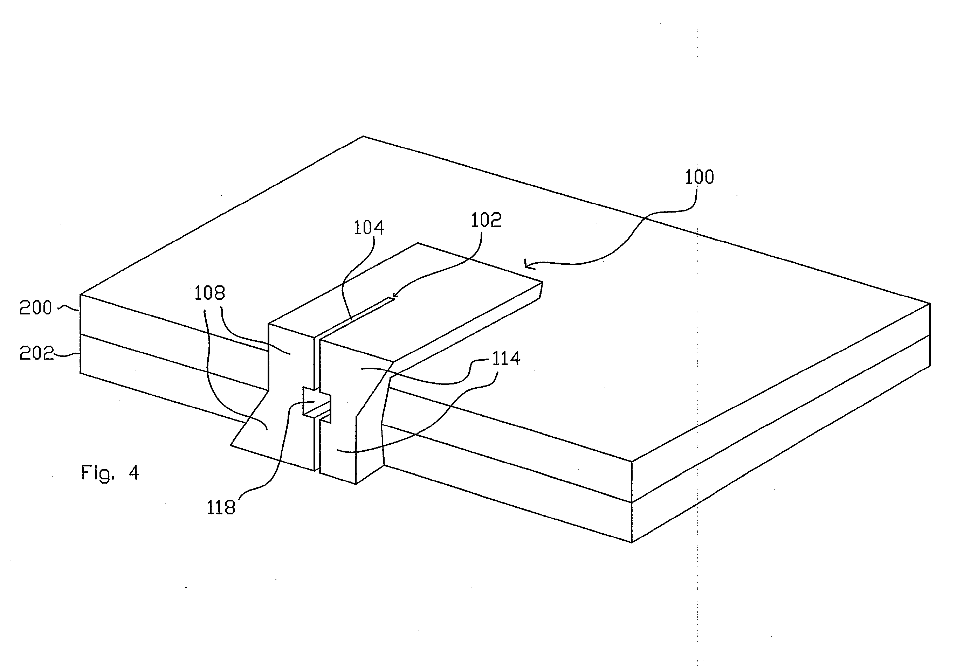

**Fig. 4** zeigt ein anderes Ausführungsbeispiel einer Verbindungsanordnung aus zwei Modulen 200, 202 und einem anderen Verbindungselement 100, das nicht doppelschwalbenschwanzförmig ausgebildet ist, sondern als Quader mit zwei prismatischen (hier ein Prisma mit dreieckiger Grundfläche) Überständen ausgebildet ist. Dadurch ist in jeder Aussparung der Module 200, 202 nur auf einer Seite ein Hinterschnittprofil eingeführt. Eine Spreizelementaufnahme 118 hat bei diesem Ausführungsbeispiel einen rechteckigen Querschnitt, die zum Beispiel mit einem Bolzen mit rechteckigem Querschnitt ausgefüllt werden kann. Bezogen auf die Spreizelementaufnahme 118 haben die Eingriffsabschnitte 108, 114 eine punktsymmetrische Ausgestaltung.

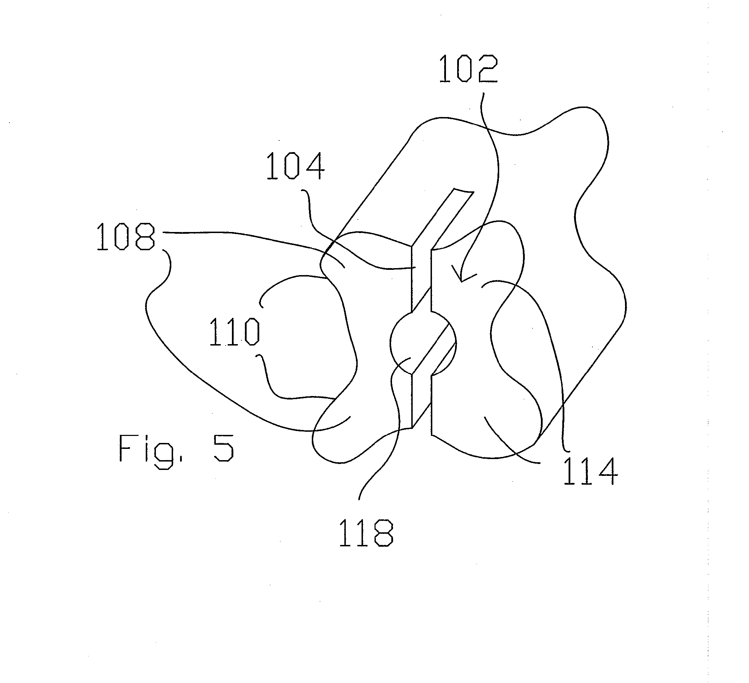

**Fig. 5** zeigt als Alternative zu einem Schwalbenschwanzdoppelprofil als Verbindungsanordnung eine Anordnung mit abgerundeten Kanten, die als knochenförmig bezeichnet werden kann.

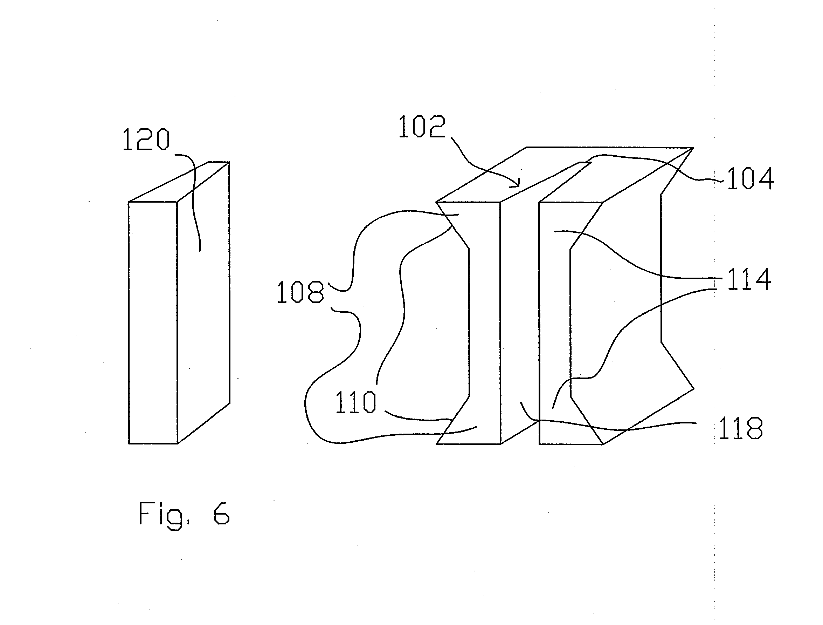

Gemäß **Fig. 6** wird statt einer Schraube als Spreizelement ein Keil 120 verwendet, der in eine als aufgeweiteten Bereich des Spalts 104 gebildete Spreizelementaufnahme eingepresst wird, um die Aufspreizung bzw. Verkeilung zu bewerkstelligen.

Gemäß **Fig. 7** wird als Spreizelement 120 ein Nagel in eine Spreizelementaufnahme 118 eingetrieben. Hier haben die Eingriffselemente 108, 114 im Querschnitt im Wesentlichen U-Form. Der Spalt 104 kann sich auch verjüngen.

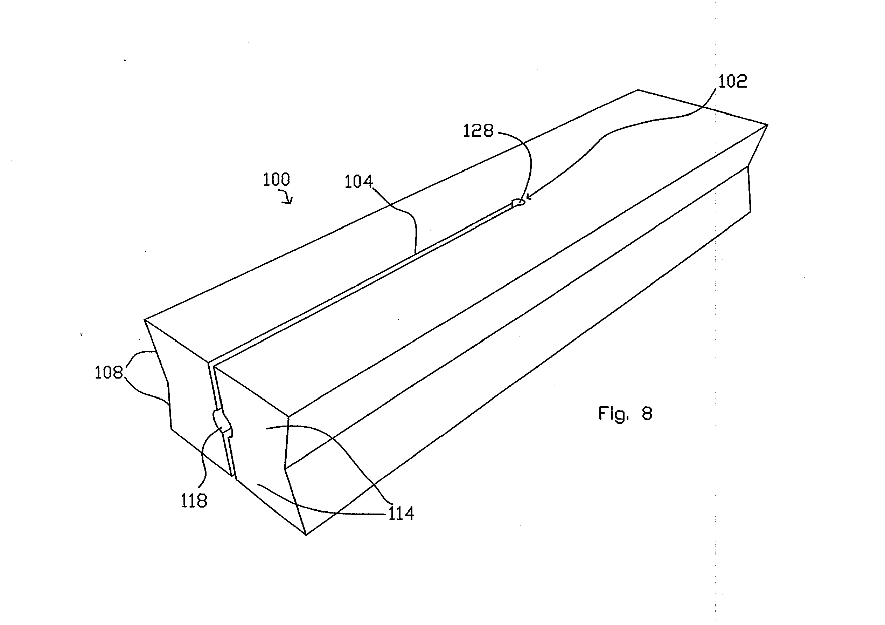

**Fig. 8** zeigt eine räumliche Ansicht eines Verbindungselements 100 gemäß einem exemplarischen Ausführungsbeispiel mit Doppelschwalbenschwanzprofil.

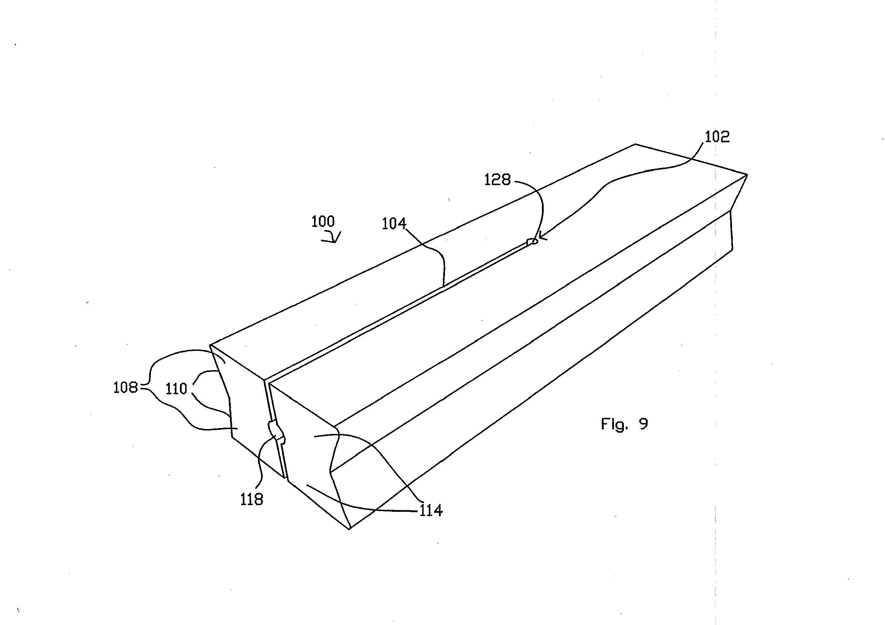

**Fig. 9** zeigt eine Verbindungsanordnung 100, die ähnlich wie Fig. 8 ausgestaltet ist, aber abgerundete Kanten bei dem Schwalbenschwanzprofil aufweist.

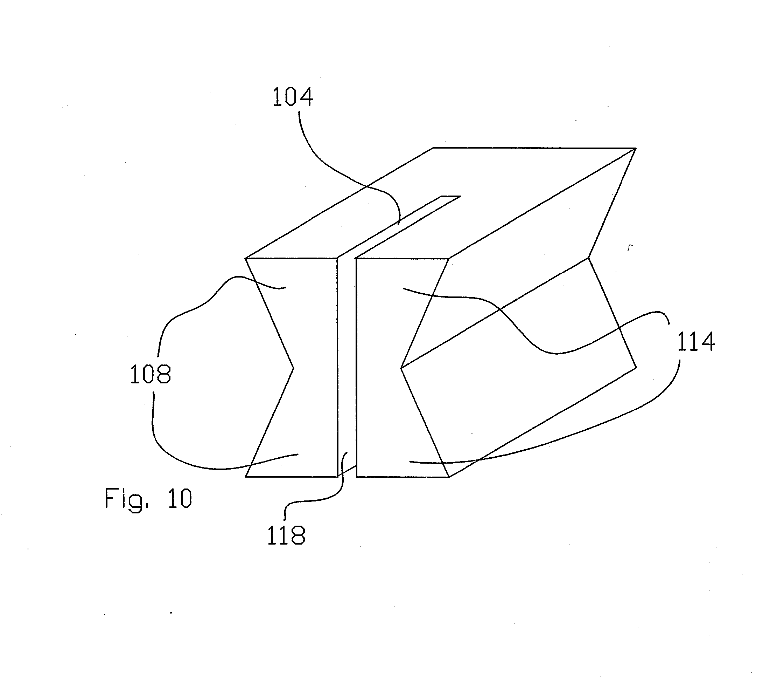

**Fig. 10** zeigt eine Anordnung ähnlich wie in Fig. 6, wobei jedoch nun die beiden Eingriffselemente 108, 114 wiederum als Schwalbenschwanzprofil ausgebildet sind, im Gegensatz zu der im Wesentlichen Doppel-U-Anordnung von Fig. 6.

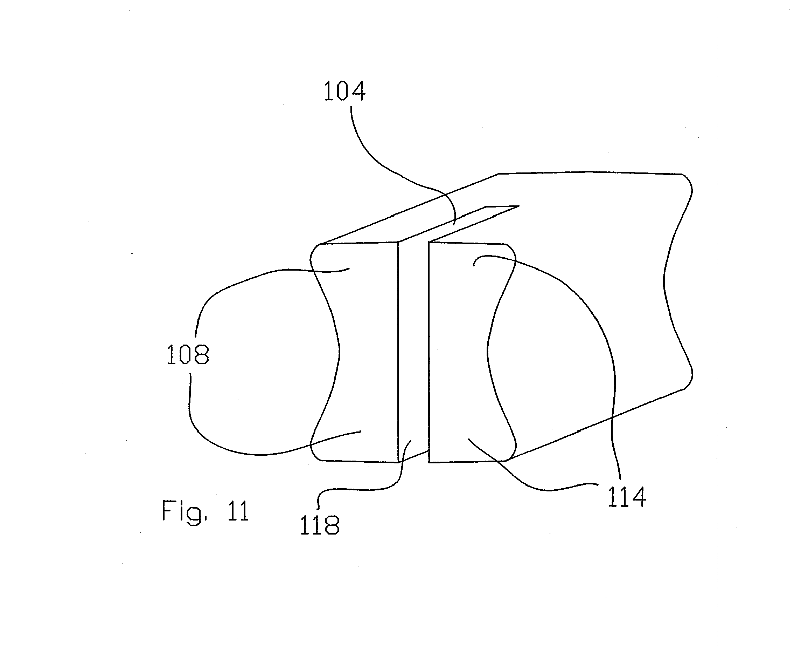

**Fig. 11** zeigt eine ähnliche Konfiguration wie in Fig. 10, jedoch wiederum mit abgerundeten Kanten.

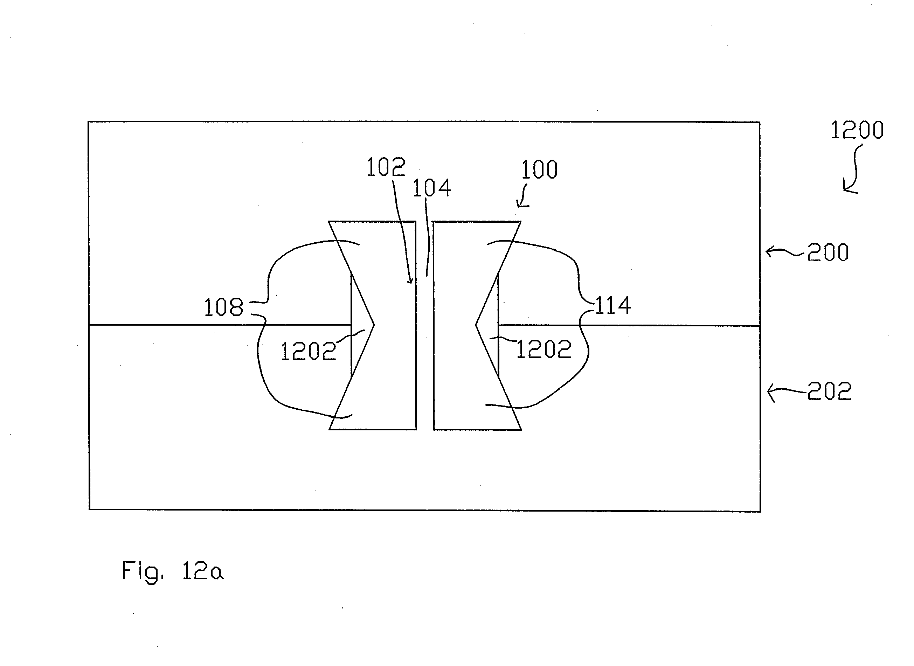

**Fig. 12a** zeigt eine Verbindungsanordnung 1200 mit einem Verbindungselement 100 gemäß einem exemplarischen Ausführungsbeispiel der Erfindung, bei dem das Verbindungselement 100 nicht über den gesamten Bereich formschlüssig ist. Statt dessen verbleibt in der Draufsicht von Fig. 12a beidseitig eine jeweils dreieckförmige Aussparung 1202.

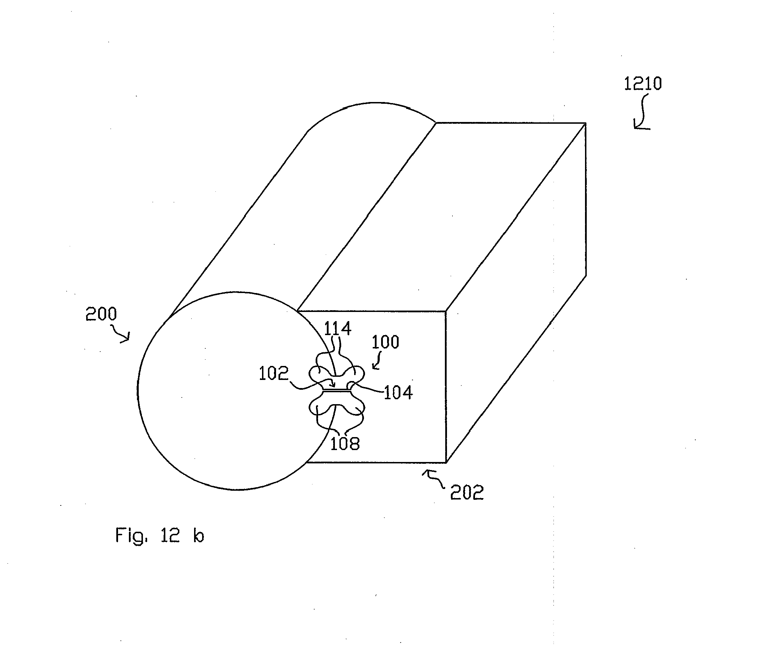

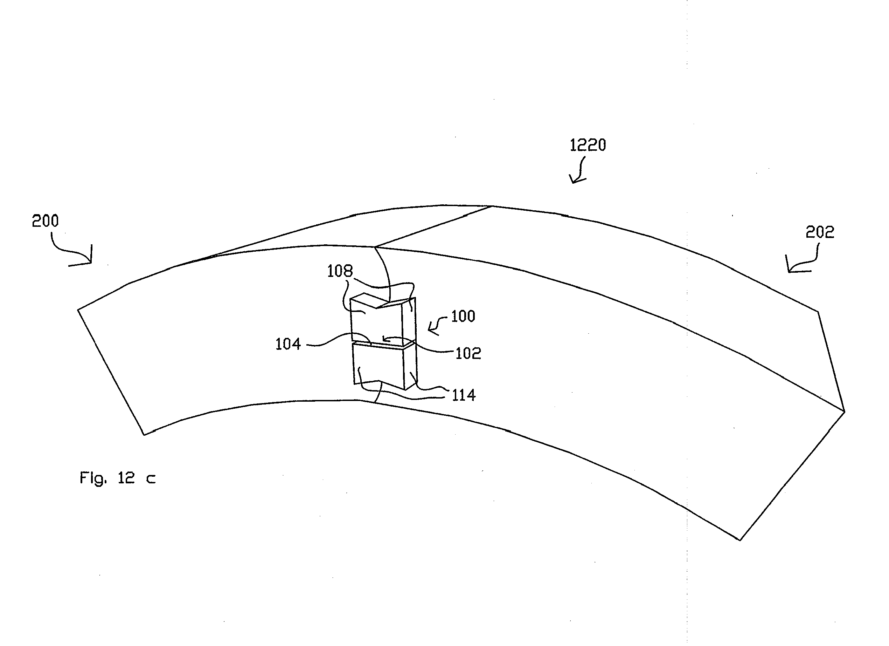

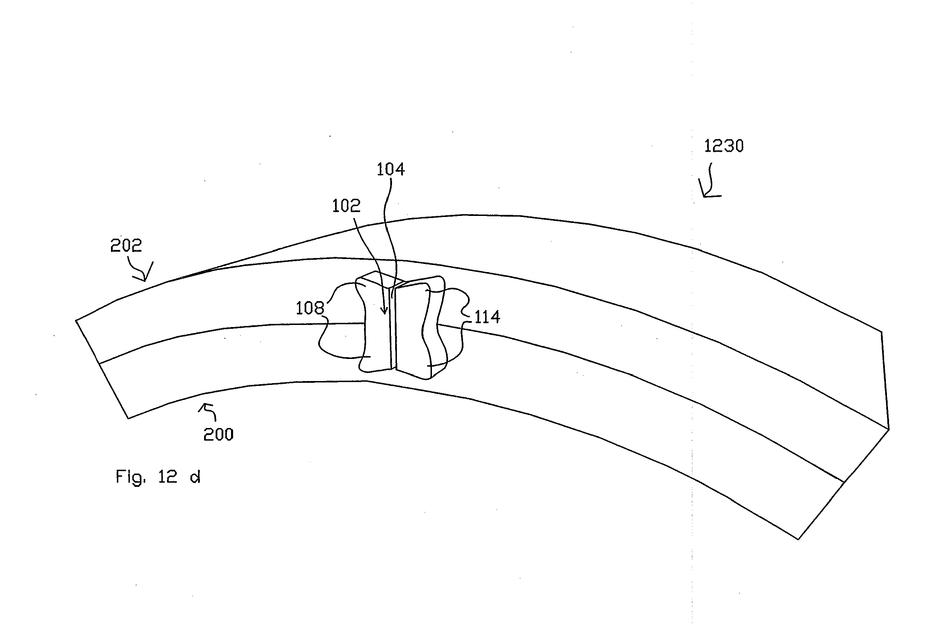

**Fig. 12b****,** **Fig. 12c** und **Fig. 12d** zeigen Verbindungsanordnungen 1210, 1220 bzw. 1230 gemäß exemplarischen Ausführungsbeispielen der Erfindung, bei denen nicht planare Modulvarianten eingesetzt sind.

Gemäß Fig. 12b ist ein zylindrisches Modul 200 mit rundem Querschnitt mit einem quaderförmigen Modul 202 mit einseitig runder Aussparung verbunden.

Gemäß Fig. 12c sind zwei nebeneinander angeordnete bogenförmige Module 200, 202 miteinander verbunden.

Gemäß Fig. 12d sind zwei übereinander angeordnete bogenförmige Module 200, 202 miteinander verbunden.

Das erfindungsgemäße Verbindungssystem stellt eine zuverlässige Verbindung zwischen Modulen aller Art her und lässt sich wieder lösen, ohne Modul oder Verbindungselement zu beschädigen. Dies ermöglicht sowohl eine Wiederverwendung der Verbindungselemente als auch eine schnelle und einfache Rekombination von Modulteilen. Module, vorzugsweise im Möbelbau, können somit miteinander verbunden werden. Als Option kann diese Verbindung jederzeit wieder gelöst und an anderer Stelle eingesetzt werden. Dadurch entstehen zahlreiche Variationsmöglichkeiten in der Anordnung der einzelnen Module, wodurch sich verschiedenste Möbel ergeben, insbesondere Tisch-, Sitz-, Liege-, Ablege- und/oder Bar- oder Regal-Möbel und zahlreiche andere Möbelvarianten.

Zum Bereitstellen einer lösbaren Verbindung von zwei Modulen mittels eines Verbindungselementes können gemäß exemplarischen Ausführungsbeispielen insbesondere die folgenden Maßnahmen getroffen werden.

Bei dem Modul kann an der mindestens einen Verbindungsstelle jeweils eine Gratleiste ausgenommen (zum Beispiel eingefräst) sein. Die Gratleisten von zwei zu verbindenden Modulen können logisch angeordnet werden.

Bei dem Verbindungselement kann die Verbindung vorzugsweise als ein doppelter Schwalbenschwanz ausgestaltet sein, der mittig gespalten ist. In diesem Spalt befindet sich zum Beispiel ein Gewindestift mit Innensechskant.

Was die Verbindung betrifft, so können die Gratausnehmungen der zu verbindenden Module derart ausgestaltet sein, dass das Verbindungselement mit geringem Spiel hineinpasst. Der Gewindestift wird mittels eines Imbus-Faustschlüssels in den Spalt des Verbindungselementes gedreht. Durch das Auseinanderkeilen des Verbinders werden die Module miteinander fixiert. Durch Herausdrehen des Gewindestifts mit Innensechskant mittels des Imbus-Faustschlüssels kann die Verbindung gelöst und dann wieder nach Wunsch eingesetzt werden.

Bei einem Herstellungsverfahren gemäß exemplarischen Ausführungsbeispielen wird in die Leiste mit rechteckigem, quadratischen, etc. Querschnitt mit einer Tischfräse zuerst beidseitig oben und unten bevorzugt ein Schwalbenschwanz (oder eine andere Form - etwa rund ausgebildet, zum Beispiel wie Knochenquerschnitt) eingefräst. Dann wird sie auf das gewünschte Maß abgelängt, die gefräste Leiste wird nun in den gewünschten Längen zugeschnitten. Nun wird mit einer Ständerbohrmaschine ein vertikales Loch gebohrt, um ein späteres Ausfransen des dann bis zu diesem Loch mit einer Kreissäge geschnittenen Mittelschlitzes zu verhindern. Dann wird entlang dieses Schlitzes in den Mittelpunkt des Verbindungsquerschnittes mit einer Langlochbohrmaschine ein Loch mit 5 mm Durchmesser gebohrt und in dieses wird dann eine 6mm Schraube gedreht, welche ein Gewinde in das Loch schneidet. Es ist alternativ möglich die Verbindung mit einer CNC Maschine herzustellen.

Die Form eines Moduls kann eine Wand, eine Platte, ein Kubus, ein Quader, ein Rhombus, ein Bogen, eine Welle, etc. sein. Jedes Modul kann massiv oder hohl ausgestaltet sein. An bzw. nahe der Verbindungsstelle sollen die zu verbindenden Module formschlüssig sein.

Als Material für das Modul können zum Beispiel Holzkuben aus schichtverleimtem Birkensperrholz verwendet werden. Schichtverleimtes Holz ist aufgrund des geringeren Verzugs im Vergleich zu Holz mit durchgehender Lamelle besonders gut geeignet. Andere mögliche Materialen sind Gummi, Metall, Plastik, Kunststoff, Glasfaser, Kautschuk, Stahl, Beton und weitere Materialen, prinzipiell sind alle Materialien geeignet, insbesondere alle üblichen Baumaterialien. Andere Materialien sind möglich.

Das Verbindungselement kann verschiedene Formen haben. Alternativ zu einem doppelten Schwalbenschwanz sind auch abgerundete Formen wie ein Knochenquerschnitt und andere schlüssige Formen möglich. Als Material für das Verbindungselement eignen sich alle Materialien, die elastisch genug sind, dass eine Spreizung möglich ist. Bevorzugt sind zum Fräsen geeignete Materialien. Massivholz ist bevorzugt, wenn die Verbindung wieder lösbar sein soll. Bei Holz ist bevorzugt, dass für lösbare Verbindungen das Schwindmaß des Verbindungselementes kleiner als oder gleich wie das Schwindmaß des Modulmaterials ist. Für nicht lösbare Verbindungen sollte das Schwindmaß des Verbindungselementes größer als oder gleich wie das Schwindmaß des Modulmaterials sein.

Hinsichtlich geeigneter Dimensionen sollte die Verbindungselement-Länge auf Modulgröße, Gewicht etc. angepasst sein. Zum Beispiel ist die Verbindung vorzugsweise ein 10cm (Variationsmaß=VM VM 8cm-15cm) langer doppelter Schwalbenschwanz, der mittig in Längsrichtung auf eine Länge von 6,3cm (VM 4cm -12cm) gespalten ist. In diesem Spalt befindet sich ein 2cm-8 cm langer Gewindestift mit Innensechskant.

Anwendungsbeispiele von Ausführungsbeispielen der Erfindung sind ein Bausatz für Kinder (mit entsprechend geringerer Dimension). Generell können alle Arten von Möbeln oder Wandverbindungen hergestellt werden. Bei großen Dimensionen ergeben sich Anwendungen im Fassadenbau, bei Fertigteilhäusern und im Brückenbau.

Für den Möbelbau ist zum Beispiel folgende Kombination der Module (zum Beispiel als Kuben ausgestaltet) möglich. Die Module werden Gratausnehmung an Gratausnehmung aneinandergestellt, ineinander-, -gesetzt oder -gelegt. Dann wird die Verbindung in die aufeinander ausgerichteten Gratausnehmungen eingeführt und die Module werden miteinander verbunden. Möchte man die Module anders verwenden, werden die Verbindungen wie oben beschrieben gelöst. Die Module werden in die nun gewünschte Position gebracht und mit derselben Vorgehensweise, wie oben beschrieben, miteinander fixiert.

In Modulsystemen werden in einem Beispiel die Kuben von Vorder- und Rückseite ausgehend mit 8,5cm - 15,5cm langen, horizontalen parallelen Gratausnehmungen, in Form von einfachen Schwalbenschwänzen jeweils im gleichbleibenden Abstand von 7cm (Multiplikator: 5, 6, 7, 8,9 ,10...) versehen. Natürlich sind vielen andere Formen möglich.

Gratausnehmung: Länge: (VM 8,5cm - 15,5cm), Breite: Oberseite VM (1cm-8cm) Unterseite VM 1,4cm - 9cm, Höhe 0,8cm (0,2cm - 5cm) Winkel von 15 Grad (VM 12Grad-20Grad)

Bei der Verbindung werden in die Module Gratleisten (horizontale Gratausnehmungen in Längsrichtung mit einer Gesamtlänge 10.1cm - Variationsmaß Gesamtlänge bis 600cm) in Form von einfachen Schwalbenschwänzen eingefräst. Die Module werden aneinandergesetzt und mittels der Verbindung verbunden, vorzugsweise doppelte Schwalbenschwänze in der Länge von 10 cm (Variationsmaß), Breite von jeweils 2.5cm (Variationsmaß von 20 mm bis 40 mm), Winkel von 15° (Variationsmaß von 12°bis 20°). Es ist eine Verbindung sowohl in Horizontalrichtung als auch in Vertikalrichtung möglich.

Hinsichtlich der Anordnung der Gratleisten befinden sich die Gratleisten an der Vorder- und Rückseite der Module. Dabei wird ein Anordnungsraster gewählt, welches die höchstmögliche Variation der Anordnungen der Module zulässt. Generell sind die Modulmaße gemäß einem Ausführungsbeispiel immer ein Vielfaches voneinander und die Verbindungen immer in den gleichen Abständen vorgesehen, um ein Maximum an Variationsmöglichkeiten der Anordnung zu gewährleisten.

Um möglichst viele Verbindungsvarianten der Module zu schaffen, werden die Gratausnehmungen gemäß einem Ausführungsbeispiel nach einem systematischen Raster angeordnet. Ebenso folgen die Kubenmaße dem Prinzip der Vervielfachung. Die Breite und die Höhe der Kuben ist gemäß einem Ausführungsbeispiel immer ein Vielfaches von 7cm (VM 200cm x 200cm oder eines anderen Multiplikators 3, 5, 7 etc.).

Die offenen Gratleisten werden gemäß einem Ausführungsbeispiel mit Füllern (zum Beispiel aus MDF -Platten- medium density fiberboard, sprich mitteldichte Faserplatten) geschlossen. Dabei handelt es sich gemäß einem Ausführungsbeispiel um einfache Schwalbenschwänze in einer Länge von 10,5cm (VM 8,5cm -15,5cm). An der Oberseite befindet sich eine Kerbe (Breite 8mm -15 mm, Tiefe 1mm -5 mm, in runder Ausfräsung ausgeführt), die das manuelle Herausziehen und Einführen des Füllers in die Gratausnehmungen ermöglicht.

Es handelt sich gemäß einem Ausführungsbeispiel um eine wieder lösbare Verbindung von Elementen. In diesen Elementen (zum Beispiel Kuben) sind Gratausnehmungen in Form von Schwalbenschwänzen ausgefräst. In die horizontalen Gratausnehmungen von zwei Elementen wird die doppelte Schwalbenschwanzverbindung eingeführt und mittels eines Schraubens (Durchmesser 6 mm Variationsmaß), der in den ausgeschnittenen Spalt diese Leiste eingeführt wird verspannt und fixiert.

Möchte man die Kuben anders verwenden, werden die Verbindungen durch leichtes Herausdrehen der Schraube und Ziehen an der Schraube wieder aus den Kubenfräsungen herausgezogen. Die Kuben werden in die nun gewünschte Position gebracht und mit derselben Vorgehensweise wie oben beschrieben miteinander fixiert.

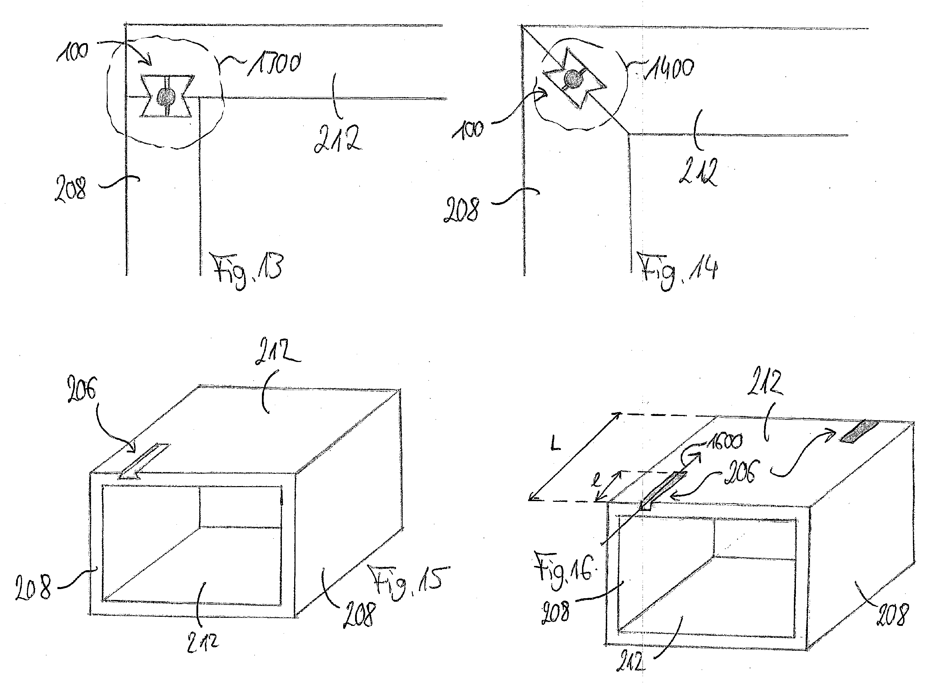

**Fig. 13** zeigt zwei orthogonal aneinandergrenzende Wandflächen 212, 208 zweier Module, die in einem Verbindungsbereich 1300 an rechtwinklig zueinander orientierten Endabschnitten der Module mittels eines Verbindungselements 100 miteinander verbunden sind. Dadurch kann durch Einsatz des Verbindungselements 100 auch eine lösbare Verbindung in einem Eckbereich realisiert werden.

Die Konfiguration von **Fig. 14** unterscheidet sich von der in Fig. 13 gezeigten Konfiguration dadurch, dass in einem Verbindungsbereich 1400 die miteinander zu verbindenden Seitenwände 208, 212 im Querschnitt nicht rechtwinklige, sondern dreieckförmige (genauer gesagt dreieckförmig aufeinander angepasste) Endabschnitte haben, die nach Aneinanderlegen der beiden Seitenflächen 208, 212 mit Berührkontakt an den dreieckförmigen Endabschnitten zur Bildung von einem insgesamt rechtwinkligen Körper führen.

**Fig. 15** zeigt ein quaderförmiges Modul mit einem hohlen Innenbereich. Bei dem Modul gemäß Fig. 15 ist in einer oberen Seitenwand 212 eine Aussparung 206 gebildet, in die ein erfindungsgemäßes Verbindungselement eingeführt werden kann, wenn ein entsprechendes Modul derart an das in Fig. 15 gezeigte Modul angesetzt wird, dass deren beiden Aussparungen 206 gemeinsam einen Aufnahmeraum bilden, welcher der Geometrie des Verbindungselements entspricht.

**Fig. 16** zeigt eine ähnliche Anordnung wie Fig. 15 mit dem Unterschied, dass in der oberen Seitenwand 212 nicht nur eine Aussparung, sondern zwei zueinander parallel ausgerichtete Aussparungen 206 gebildet sind. In Fig. 16 ist ferner gezeigt, dass eine Aussparungslänge bzw. Verbindungselementlänge I der Aussparung 206 in Einführrichtung 1600 des in Fig. 16 nicht gezeigten Verbindungselements kleiner als eine Gesamtlänge L der Seitenwand 212 des in

Fig. 16 gezeigten Moduls in der Einführrichtung 1600 ist. Dies zeigt, dass für ein Herstellen einer lösbaren Verbindung zwischen dem in Fig. 16 gezeigten Modul und einem zum Beispiel gleichartigen anderen Modul das Ausbilden einer Verbindung über die verhältnismäßig geringe Länge I ausreichend ist, die geringer als die Länge L ist. Im gezeigten Ausführungsbeispiel gilt I = 1/4 L.

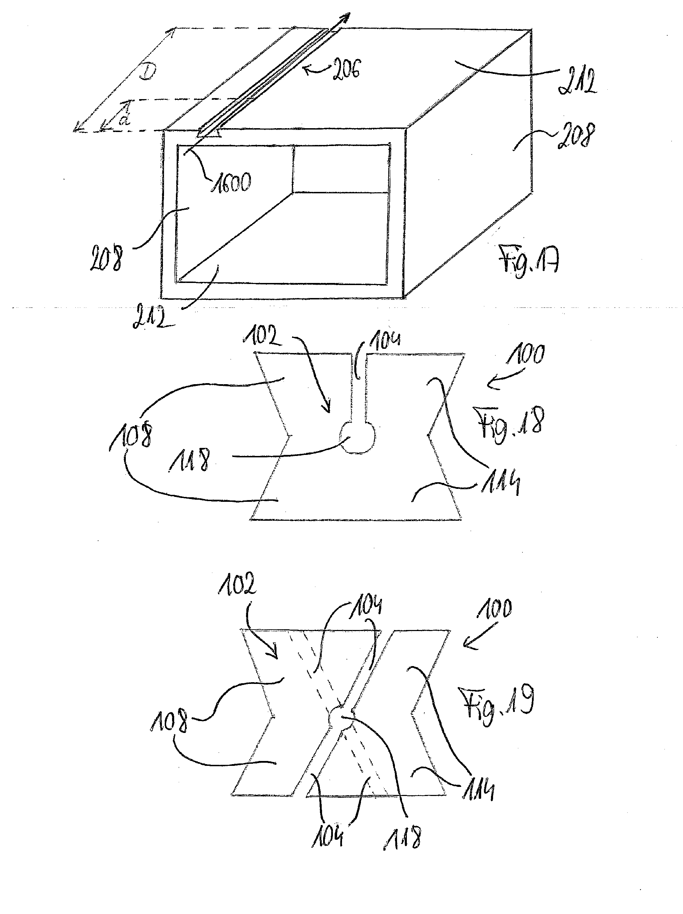

**Fig. 17** zeigt ein zu Fig. 16 alternatives Ausführungsbeispiel, bei dem ein als Hohlkörper ausgeführtes Modul an einer oberen Seitenwand 212 eine Aussparung 206 aufweist, die sich über die Gesamtlänge D der oberen Seitenwand 212 erstreckt. Ein in Fig. 17 nicht gezeigtes Verbindungselement kann gemäß dieser Ausgestaltung eine gegenüber der Gesamtlänge oder Modulwandlänge D verkürzte Verbindungselementlänge d aufweisen. Das Verbindungselement kann somit nur bis zu der Länge d in der Einführrichtung 1600 in die Aussparung 206 eingeführt werden, insbesondere so, dass eine Stirnfläche des Verbindungselements bündig mit einer Oberfläche der Seitenwand 212 abschließt. Es hat sich herausgestellt, dass bereits kurze Verbindungsabschnitte der Länge I bzw. d ausreichend sind, um eine zuverlässige Verbindung zwischen zwei angerenzenden Seitenwänden 212 und einem Verbindungselement auszubilden.

Ferner sind gemäß Fig. 16 und Fig. 17 die erforderlichen Größen und Gewichte von Verbindungselementen gering, so dass die Anordnung insgesamt kompakt und leichtgewichtig ausgestaltet werden kann. Das Ausführungsbeispiel von Fig. 16 hat den besonderen Vorteil, dass das Anstoßen des Verbindungselements an die bodenseitige Endfläche der Aussparung 206 einem Benutzer eine haptische Bestätigung liefert, dass das Verbindungselement bis zu einer korrekten Tiefe eingeführt ist. Das in Fig. 17 gezeigte Ausführungsbeispiel hat den besonderen Vorteil besonders geringer Kosten, da eine durchgehende Nut, wie die gezeigte Aussparung 206 der Gesamtlänge L, besonders kostengünstig gefertigt werden kann.

**Fig. 18** zeigt ein zu Fig. 1 alternatives Verbindungselement 100, das sich von letzterem dadurch unterscheidet, dass der Spalt 104 nur einseitig der Spreizelementaufnahme 118 gebildet ist. Mit anderen Worten ist die untere Hälfte des Verbindungselements 100 gemäß Fig. 18 von Bohrungen frei, und nur die obere Hälfte weist den Spalt 104 auf. Dies führt zu einer kostengünstigen Fertigung.

**Fig. 19** zeigt ein weiter alternatives Ausführungsbeispiel eines Verbindungselements 100, bei dem der Spalt 104 nicht wie in Fig. 1 vertikal zu einer unteren Fläche des Verbindungselements 100 ausgerichtet ist, sondern winkelig geneigt dazu. Möglich ist zum Beispiel der in Fig. 19 mit durchgehenden Linien gezeigte Spalt 104, der sich diagonal durch das Verbindungselement 100 hindurch erstreckt. Alternativ oder ergänzend kann jedoch auch die in Fig. 19 gezeigte gestrichelte Konfiguration eines Spalts 104 implementiert werden.

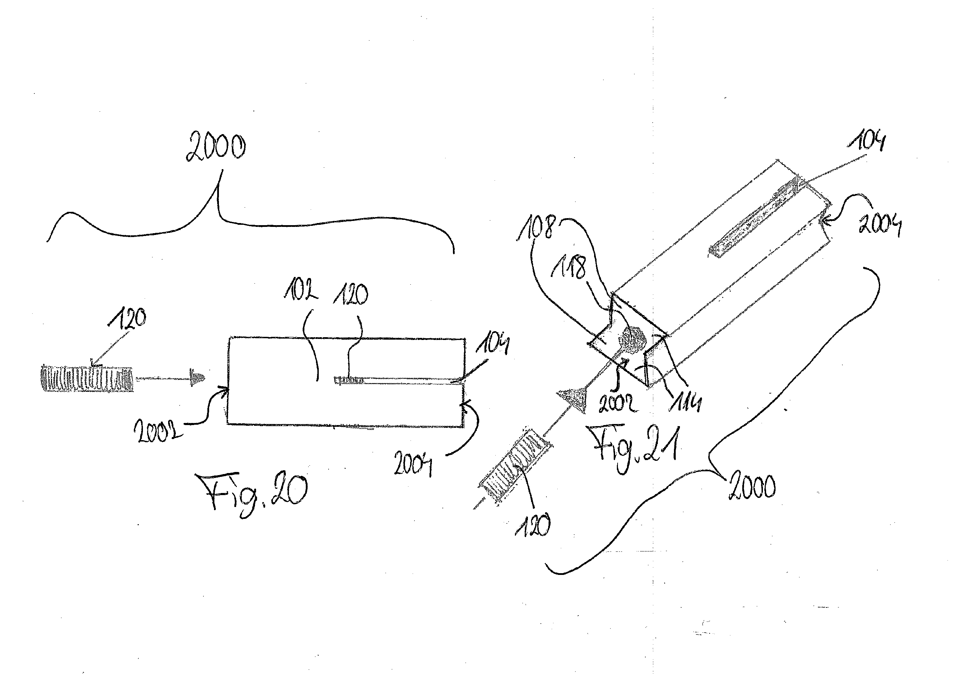

**Fig. 20** zeigt ein Verbindungselement 2000 gemäß einem anderen exemplarischen Ausführungsbeispiel der Erfindung in einer Draufsicht. **Fig. 21** zeigt das Verbindungselement 2000 während der Montage in einer räumlichen Ansicht.

Gemäß der gezeigten Ausgestaltung enthält das Verbindungselement 2000 einen Grundkörper mit einer ebenen vorderseitigen Stirnfläche 2002 und einer ebenen rückseitigen Stirnfläche 2004, die einander parallel gegenüberliegen und zu einer Erstreckung in Einführrichtung der Spreizelementaufnahme 118 senkrecht ausgerichtet sind. Wie in Fig. 20 gezeigt, erstreckt sich der Spalt 104 ausgehend von der hinter- oder rückseitigen Stirnfläche 2004 in den Zentralabschnitt 102 hinein. Dagegen erstreckt sich die Spreizelementaufnahme 118, wie in Fig. 21 gezeigt, ausgehend von der vorderseitigen Stirnfläche 2002 in den Zentralabschnitt 102 hinein. Die Begriffe der vorderseitigen bzw. hinterseitigen Stirnfläche 2002, 2004 beziehen sich auf die Orientierung des Verbindungselements 2000 im in zwei Modulen montierten Zustand des Verbindungselements 2000. Mit anderen Worten ist die vorderseitige Stirnfläche 2002 im montierten Zustand von außen zu sehen, wohingegen die hinterseitige Stirnfläche 2004 im montierten Zustand im Inneren der Module versenkt ist.

Zur Montage wird das Verbindungselement 2000 in die aneinander anliegenden Aussparungen der Module eingeführt, und dann wird die Schraube 120 in ein vorzugsweise konisches Loch 118 eingedreht. An der gegenüberliegenden Seite weitet sich durch das Einführen der Schraube 120 in die Spreizelementaufnahme 118 Spalt 104 auf, womit es zu der Verkeilung kommt.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verbindungsanordnung (300), die aufweist:
ein erstes Modul (200), das eine erste Aussparung (204) aufweist;
ein zweites Modul (202), das eine zweite Aussparung (206) aufweist;
ein Verbindungselement (100) zum Verbinden des ersten Moduls (200) mit dem zweiten Modul (202), wobei das Verbindungselement (100) aufweist:
einen Zentralabschnitt (102), in dem ein Spalt (104) gebildet ist;
einen sich von dem Zentralabschnitt (102) aus entlang einer ersten Richtung (106) erstreckenden ersten Eingriffsabschnitt (108) mit Hinterschnitt (110) zum Einführen in die erste Aussparung (204) des ersten Moduls (200) und in die zweite Aussparung (206) des zweiten Moduls (202);
einen sich von dem Zentralabschnitt (102) aus entlang einer zweiten Richtung (112) erstreckenden zweiten Eingriffsabschnitt (114) mit Hinterschnitt (116) zum Einführen in die erste Aussparung (204) des ersten Moduls (200) und in die zweite Aussparung (206) des zweiten Moduls (202), wobei die zweite Richtung (112) der ersten Richtung (106) entgegengesetzt ist;
eine sich in den Spalt (104) hinein erstreckende Spreizelementaufnahme (118) zum Aufnehmen eines Spreizelements (120); und
das Spreizelement (120), das zum Einführen in die Spreizelementaufnahme (118) derart eingerichtet ist, dass mit dem Einführen sich der erste Eingriffsabschnitt (108) in dem ersten Modul (200) und in dem zweiten Modul (202) und der zweite Eingriffsabschnitt (114) in dem ersten Modul (200) und in dem zweiten Modul (202) verspreizt, womit das erste Modul (200) und das zweite Modul (202) mittels des Verbindungselements (100) miteinander lösbar verbindbar sind;
wobei in Einführrichtung des Verbindungselements (100) in die erste Aussparung (204) und die zweite Aussparung (206) das Verbindungselement (100) eine kleinere Länge (L) aufweist als das erste Modul (200) und das zweite Modul (202).

2. Anordnung (300) nach Anspruch 1, wobei die erste Aussparung (204) als erste Gratleiste in einem Oberflächenbereich des ersten Moduls (200) gebildet ist und/oder die zweite Aussparung (206) als zweite Gratleiste in einem Oberflächenbereich des zweiten Moduls (202) gebildet ist

3. Anordnung (300) nach einem der Ansprüche 1 oder 2, wobei das erste Modul (200) und/oder das zweite Modul (202) Holz, insbesondere schichtverleimtes Holz, aufweist oder aufweisen oder daraus besteht oder bestehen.

4. Anordnung (300) nach einem der Ansprüche 1 bis 3, wobei ein Schwindmaß des Materials des ersten Moduls (200) und/oder des zweiten Moduls (202) größer als oder gleich wie ein Schwindmaß des Materials des Verbindungselements (100) ist.

5. Anordnung (300) nach einem der Ansprüche 1 bis 4, aufweisend zumindest ein Füllelement, das zum Füllen eines von einem jeweiligen Eingriffsabschnitt (108, 114) freien Abschnitts der jeweiligen Aussparung (204, 206) derart eingerichtet ist, dass der mit dem Füllelement gefüllte Abschnitt bündig mit einer umgebenden Oberfläche des jeweiligen Moduls (200, 202) abschließt.

6. Anordnung (300) nach einem der Ansprüche 1 bis 5, wobei der erste Eingriffsabschnitt (108) und der zweite Eingriffsabschnitt (114) nur teilweise die erste Aussparung (204) und die zweite Aussparung (206) ausfüllen.

7. Anordnung (300) nach einem der Ansprüche 1 bis 5, wobei der erste Eingriffsabschnitt (108) und der zweite Eingriffsabschnitt (114) die erste Aussparung (204) und die zweite Aussparung (206) vollständig ausfüllen.

8. Anordnung (300) nach einem der Ansprüche 1 bis 7, wobei in der Einführrichtung die Länge (L) des Verbindungselements (100) höchstens 1/2, insbesondere höchstens 1/3, weiter insbesondere höchstens 1/4, der Länge des ersten Moduls (200) und/oder des zweiten Moduls (202) ist.

9. Anordnung (300) nach einem der Ansprüche 1 bis 8, wobei das erste Modul (200) und/oder das zweite Modul (202) als hohler Quader mit mindestens einer Seitenwand (208) ausgebildet ist, wobei in mindestens einer der mindestens einen Seitenwand (208) die jeweilige Aussparung (204, 206) oder Aussparungen (204, 206) gebildet ist oder sind.

10. Anordnung (300) nach einem der Ansprüche 1 bis 9, wobei die Aussparungen (204, 206) des ersten Moduls (200) und des zweiten Moduls (202) in gleichen Randabständen zu jeweiligen Modulenden angeordnet sind, womit unterschiedliche Module (200, 202) durch einen Benutzer flexibel verbindbar sind.

11. Anordnung (300) nach einem der Ansprüche 1 bis 10, wobei das erste Modul (200) und/oder das zweite Modul (202) mindestens eine weitere Aussparung (204, 206) mit Hinterschnitt aufweisen, insbesondere parallel zu der ersten Aussparung (204, 206) verlaufend.

12. Anordnung (300) nach einem der Ansprüche 1 bis 11, wobei das Verbindungselement (100) eines oder mehrere der folgenden Merkmale aufweist:
die Spreizelementaufnahme (118) ist nur entlang eines Teils der Länge des Zentralabschnitts (102) gebildet;
das Verbindungselement (2000) weist eine vorderseitige Stirnfläche (2002) und eine hinterseitige Stirnfläche (2004) auf, wobei sich der Spalt (104) ausgehend von der hinterseitigen Stirnfläche (2004) in den Zentralabschnitt (102) hineinerstreckt und wobei sich die Spreizelementaufnahme (118) ausgehend von der vorderseitigen Stirnfläche (2002) in den Zentralabschnitt (102) hineinerstreckt;
das Verbindungselement (100) weist eine vorderseitige Stirnfläche und eine hinterseitige Stirnfläche auf, wobei sich der Spalt (104) ausgehend von der vorderseitigen Stirnfläche in den Zentralabschnitt (102) hineinerstreckt und wobei sich die Spreizelementaufnahme (118) ausgehend von der vorderseitigen Stirnfläche in den Zentralabschnitt (102) hineinerstreckt;
der Spalt (104) ist über die gesamte Dicke (D), aber nur entlang eines Teils der Länge (L) des Zentralabschnitts (102) gebildet, wobei die Dicke (D) und die Länge (L) Dimensionen des Verbindungselements (100) senkrecht zu der ersten und der zweiten Richtung (106, 112) sind;
der erste Eingriffsabschnitt (108) und der zweite Eingriffsabschnitt (114) sind zueinander flächensymmetrisch zu dem Spalt (104) und/oder zu der ersten Richtung (106) ausgebildet;
der in einem der Module (200, 202) eingebettete Teil des ersten Eingriffsabschnitts (108) und der in diesem Modul (200, 202) eingebettete Teil des zweiten Eingriffsabschnitts (114) sind gemeinsam ausgebildet als eines aus einer Gruppe bestehend aus einem Schwalbenschwanz, einem Schwalbenschwanz, bei dem ein Teil der Kanten oder alle Kanten abgerundet ist oder sind, und einem Quader mit mindestens einem hinterschneidenden Vorsprung;
das Spreizelement (120) ist als Zylinder ausgebildet und/oder weist ein Außengewinde (124) zum Eindrehen in die Spreizelementaufnahme (118) auf und/oder ist als Keil ausgebildet und/oder ist als gewindefreier Bolzen ausgebildet;
eine Stirnfläche des Spreizelements (120) weist ein Angreifprofil (126) zum Angreifen eines Werkzeugs zum Einführen des Spreizelements (120) in die Spreizelementaufnahme (118) und zum Entfernen des Spreizelements (120) aus der Spreizelementaufnahme (118) auf;
der Spalt (104) hat entlang der ersten Richtung (106) eine geringere Ausdehnung als die Spreizelementaufnahme (118) und hat in einer zu der ersten Richtung (106) orthogonalen dritten Richtung, die in einer Oberflächenebene (122) des Verbindungselements (100) liegt, welche von der Spreizelementaufnahme (118) durchstoßen wird, eine größere Ausdehnung als die Spreizelementaufnahme (118);
der Spalt (104) ist an seiner Stirnseite (128) aufgeweitet, insbesondere zylinderförmig aufgeweitet;
das Verbindungselement (100) weist Holz, insbesondere Massivholz oder schichtverleimtes Holz oder Holzfasern, auf oder besteht daraus.

13. Verfahren zum Verbinden eines ersten Moduls (200) mit einem zweiten Modul (202) mittels eines Verbindungselements (100),
wobei das erste Modul (200) eine erste Aussparung (204) aufweist und das zweite Modul (202) eine zweite Aussparung (206) aufweist,
wobei das Verbindungselement (100) einen Zentralabschnitt (102), in dem ein Spalt (104) gebildet ist, einen sich von dem Zentralabschnitt (102) aus entlang einer ersten Richtung (106) erstreckenden ersten Eingriffsabschnitt (108) mit Hinterschnitt (110), einen sich von dem Zentralabschnitt (102) aus entlang einer zweiten Richtung (112) erstreckenden zweiten Eingriffsabschnitt (114) mit Hinterschnitt (116), wobei die zweite Richtung (112) der ersten Richtung (106) entgegengesetzt ist, eine sich in den Spalt (104) hinein erstreckende Spreizelementaufnahme (118) und das Spreizelement (120) aufweist,
wobei in Einführrichtung des Verbindungselements (100) in die erste Aussparung (204) und die zweite Aussparung (206) das Verbindungselement (100) eine kleinere Länge (L) aufweist als das erste Modul (200) und das zweite Modul (202),
wobei das Verfahren aufweist:
Einführen des ersten Eingriffsabschnitts (108) in die erste Aussparung (204) und in die zweite Aussparung (206);
Einführen des zweiten Eingriffsabschnitts (114) in die erste Aussparung (204) und in die zweite Aussparung (206); und
Einführen des Spreizelements (120) in die Spreizelementaufnahme (118) derart, dass mit dem Einführen sich der erste Eingriffsabschnitt (108) in dem ersten Modul (200) und in dem zweiten Modul (202) und der zweite Eingriffsabschnitt (114) in dem ersten Modul (200) und in dem zweiten Modul (202) verspreizt, womit das erste Modul (200) und das zweite Modul (202) mittels des Verbindungselements (100) miteinander lösbar verbunden werden.

14. Verfahren nach Anspruch 13, wobei das Verfahren ferner ein Herausführen des Spreizelements (120) aus der Spreizelementaufnahme (118) derart aufweist, dass mit dem Herausführen die Verspreizung des ersten Eingriffsabschnitts (108) in den Modulen (200, 202) aufgehoben wird und mit dem Herausführen die Verspreizung des zweiten Eingriffsabschnitts (114) in den Modulen (200, 202) aufgehoben wird, womit das erste Modul (200) von dem zweitem Modul (202) gelöst wird.

15. Verwendung eines Verbindungselements (100) einer Anordnung (300) nach einem der Ansprüche 1 bis 12 zum Verbinden eines ersten Möbelstücks als erstes Modul (200) mit einem zweiten Möbelstück als zweites Modul (202).
